# EUROPÄISCHE PATENTSCHRIFT

(11) **EP 1 362 964 B1**
(45) Veröffentlichungstag und Bekanntmachung des Hinweises auf die Patenterteilung: **21.06.2006**
(21) Anmeldenummer: 03009845.3
(22) Anmeldetag: 13.05.2003
(51) Int. Cl.: E04B 5/32, E04B 5/48, F24D 3/14

(54) **Betondecke, insbesondere temperierbare Betondecke**
Concrete flooring, esp. conditioned concrete flooring
Dalle en béton, spécialement dalle en béton conditionnée

(30) Priorität: 16.05.2002 DE 10222227
(43) Veröffentlichungstag der Anmeldung: 19.11.2003
(73) Patentinhaber: Bernhardt, Gerold, 64295 Darmstadt (DE)
(72) Erfinder: Bernhardt, Gerold, 64295 Darmstadt (DE)
(74) Vertreter: Weber-Bruls, Dorothée

(56) Entgegenhaltungen:
- DE-A- 1 935 580
- DE-A- 19 832 289
- DE-C- 3 301 859
- DE-U- 8 519 146
- FR-A- 899 109
- GB-A- 511 122
- GB-A- 2 245 962
- US-A- 3 679 337
- US-A- 5 327 737
- US-A- 5 388 408
- US-A- 5 726 397
- US-B1- 6 167 984
- PATENT ABSTRACTS OF JAPAN vol. 2000, no. 22, 9. März 2001 (2001-03-09) & JP 2001 123818 A (TOYOTA MOTOR CORP), 8. Mai 2001 (2001-05-08)

## Beschreibung

Die vorliegende Erfindung betrifft eine Betondecke, insbesondere eine temperierbare Betondecke, deren Verwendung als Gebäudedecke sowie eine Rohrleitung und deren Verwendung zur Temperierung von Betondecken.

Ansätze, Gebäudedecken aus Beton zur Kühlung oder zum Beheizen von Räumlichkeiten in Gebäuden anstelle von oder neben Klimaanlagen bzw. seperaten Heizsystemen zu verwenden, sind dem Fachmann bekannt. So sind bereits thermoaktive Bausysteme beschrieben worden, bei denen Betondecken als Energiespeicher genutzt werden. Dieses gelingt beispielsweise, indem ein ein Fluid enthaltendes Rohrleitungssystem schlaufenförmig in einer Betondecke verlegt wird. Derartige Rohrleitungssysteme weisen regelmäßig durchgängig einen kreisförmigen Querschnitt auf.

In der DE 40 27 833 A1 wird eine Einrichtung zur Erwärmung oder Kühlung von Gebäuden offenbart, mit der sogenannte Kühldecken, bei denen es sich entweder um abgehängte Decken mit einem dahinter liegenden Kühlsystem oder um Betondecken mit integriertem Kühlsystem handelt, durch eine verbesserte Konstruktion ersetzt werden sollen. Hierzu wird eine Gebäudedecke vorgeschlagen, die mit einem Fluidkanalsystem durchzogen ist und der zusätzlich Frischluft führende Hohlräume zugeordnet sind, wobei auch Öffnungen für den Eintritt der Frischluft und Öffnungen für den Austritt der erwärmten oder gekühlten Frischluft in Aufenthaltsbereiche des Gebäudes vorgesehen sind. Diese Hohlräume werden regelmäßig durch auf eine Geschoßdecke beabstandet aufgebaute Doppelböden gebildet. Eine derartige Konstruktion ist sehr raum- wie auch kostenintensiv und kommt demgemäß regelmäßig nur für sehr großflächige Geschossdecken in Betracht.

Gemäß DE 196 09 641 A1 lassen sich Räume kühlen, indem man Luft durch in Betondecken liegende Rohre leitet, wobei eine Kühlung der Oberfläche der Betondecke dadurch erfolgt, daß zunächst der Kern der Betondecke über die luftleitenden, im Querschnitt im wesentlich kreisförmigen Rohre gekühlt wird. Ein effektiver Wärmedurchgang wird dadurch erreicht, daß die Rohre an ihrer Innen- und Außenseite Rippen aufweisen. Die einzelnen, in gleichen Abständen von der Innenseite des Kühlrohres ausgehenden Rippen ragen bis zu etwa einem Viertel des Durchmessers des Kühlrohres in Richtung des Mittelpunktes in das Kühlrohr hinein und weisen eine Dicke auf, welche in etwa der Dicke der Außenwand des Kühlrohres entspricht. Um Rohre mit der in der DE 196 09 641 A1 geforderten wirksamen Geometrie zu erhalten, sind anspruchsvolle Herstellverfahren erforderlich, die einer Massenproduktion, z.B. für den herkömmlichen Hausbau, bereits aus Kostengründen entgegenstehen.

In der DE 100 63 777 A wird die Temperierung von Räumen über ein thermo-speicherfähiges Bauelement beschrieben, das sich an einer äußeren Oberfläche mit einem Kühlelement derart in Kontakt befindet, daß die in dem Bauelement gespeicherte Wärmelast durch den das Kühlelement durchfließenden Kaltwasserstrom oder durch Phasenveränderung von im Baustoff eingelagerten Latentspeichern abgeführt wird. Hierdurch entsteht eine mehrfache Kühlwirkung, einmal durch die mit der Wärmeentstehung zeitgleiche Strahlungsübertragung sowie ebenfalls durch freie Konvektion der den Räumen zugewandten Seiten. Die vorgeschlagene Vorrichtung kann auch als Wandkonstruktion ausgestaltet sein und mit einem vertikalen Konvektorschacht in Wirkverbindung stehen. Von Nachteil ist, daß für eine wirksame Temperierung auf Wasser als primäres Kühlmittel zurückgegriffen wird. Dieses erfordert bei der Herstellung der verwendeten Rohrsysteme sowie bei der Verlegung derselben eine sehr hohe Sorgfalt, um Undichtigkeiten zu vermeiden. Diese führen sehr schnell zur Unbrauchbarkeit des kompletten Kühlsystems, da die einbetonierte Vorrichtung nur noch bedingt ausgebessert bzw. abgedichtet werden kann. Andererseits sind Wasserschäden jedweder Art bei Gebäuden stets zu vermeiden.

Betondecken, die im Inneren Hohlräume enthalten, welche einerseits das Gewicht des Bauelements möglichst niedrig halten und andererseits soviel Raum lassen, daß eine Armierung mit Stahlstäben möglich ist, werden in der DE 30 06 672 A1 beschrieben. Die verwendeten Hohlkörper aus Blech weisen eine annähernd kubische Form mit vier an den Seitenflächen angebrachten Rohrstutzen auf, die alle in einer Ebene liegen. Über auf die Stutzen aufsetzbare Hülsen werden die Hohlkörper zu einem Kanalsystem verbunden, das es erlaubt, Warmluft in die gegossene Betondecke einzublasen, wodurch deren Trockenzeit erheblich verkürzt wird. Darüber hinaus soll dieses Kanalsystem zur Aufnahme einer elektrischen Verkabelung sowie zum Beheizen der Betondecke von innen geeignet sein. Von Nachteil ist, daß aufgrund der hohen Vernetzung der miteinander verbundenen Hohlkörper Luft nicht wirksam zum Kühlen oder Erwärmen durch die Betondecke geleitet werden kann. Auch läßt die Festigkeit dieser Decken noch Wünsche offen.

Zumeist wird zur Verringerung des Gewichts von Gebäudedecken aus Beton die Verwendung abgeschlossener Hohlkörper, häufig in Kugelform, beschrieben, die bei der Herstellung einer Betondecke in diese integriert werden, so z.B. in der deutschen Patentschrift Nr. 812 833, der EP 0 552 201 A1 oder der DE 196 07 254 A1.

In der US 3,213,581 wird zur Verringerung des Gewichts von Gebäudedecken aus Beton offenbart, eine Vielzahl von parallel hintereinander angeordneten zylinderförmigen Röhren in die Betonschicht einzuarbeiten. Diese zylinderförmigen Röhren stehen weder miteinander noch mit der Außenluft in Verbindung.

Schließlich wird in der EP 0 848 775 A1 eine Bodenbetonplatte vorgeschlagen, in die ein in sich abgeschlossenes System aus miteinander verbundenen Luftröhren eingebettet ist, das zur Beheizung dieser Bodenplatte dient.

Es wäre wünschenswert, Betondecken einsetzen zu können, die gegenüber herkömmlichen Betondecken ein geringeres Eigengewicht aufweisen, ohne daß mit der Gewichtsreduzierung Einbußen bei der Steifigkeit einhergehen.

Es wäre weiterhin wünschenswert, zur Temperierung von Gebäudedecken bzw. Bodenplatten auf Fluidleitungssysteme zurückgreifen zu können, die sich in gleicher Weise sowohl zum Heizen als auch zum Kühlen von Betondecken eignen, ohne jedoch die Nachteile der aus dem Stand der Technik bekannten Rohrleitungssysteme enthaltenden Betondecken in Kauf nehmen zu müssen.

Der vorliegenden Erfindung lag daher die Aufgabe zugrunde, eine Betondecke zur Verfügung zu stellen, die beim Gebäudebau zu einer erheblichen Gewichtseinsparung führt, ohne Einbußen bei der Steifigkeit in Kauf nehmen zu müssen, und die sich, sofern gewünscht, zudem auf einfache und sehr effiziente Weise temperieren läßt. Darüber hinaus soll die gesuchte Betondecke, insbesondere auch eine temperierbare Betondecke, einfach und kostengünstig herzustellen sein, nach der Fertigstellung ein gutes Raumklima hinsichtlich Temperatur und Feuchte erzeugen helfen und gegenüber herkömmlichen Klima- und/oder Heizungsanlagen zu einer günstigeren Energieeffizienz beitragen.

Demgemäß wurde eine Betondecke, insbesondere eine temperierbare Betondecke, gefunden, enthaltend, eine Ober- und eine Unterseite, enthaltend erste betonfreie Räume , insbesondere Hohlräume, die wenigstens entlang eines Abschnitts mindestens eine, insbesondere zwei, drei, vier oder mehr, im wesentlichen ebene, konkave, konvexe oder wellen- oder zackenförmige erste Wandungsfläche aufweisen, die nicht im wesentlichen parallel oder senkrecht zur Unter- und/oder Oberseite der Betondecke ausgerichtet ist, und zweite betonfreie Räume, insbesondere zweite Hohlräume, wobei in der Betondecke die ersten betonfreien Räume, insbesondere zwei, drei, vier oder eine Vielzahl an ersten betonfreien Räumen, und die zweiten betonfreien Räume wenigstens abschnittsweise alternierend aufeinanderfolgend miteinander verbindbar oder verbunden, angeordnet sind, wobei besagte erste betonfreie Räume einen größeren maximalen Durchmesser im Querschnitt haben als besagte zweite betonfreie Räume. Gemäß einer zweckmäßigen Ausgestaltung ist allenfalls eine oder gar keine erste Wandungsfläche des ersten betonfreien Raumes im wesentlichen parallel oder senkrecht zu Unter- und/oder Oberseite der Betondecke ausgerichtet. Bei dieser Ausführungsform sollen abgerundete oder abgeschnittene Ecken oder Kanten solcher ersten betonfreien Räume bzw. Hohlräume nicht als nicht-parallele Wandungsflächen dieser Räume in Betracht gezogen werden. Die im wesentlichen ebenen, konvexen, konkaven, wellen- oder zackenförmigen oder anderweitig geformten ersten Wandungsflächen können in einer Ausführungsform auch im Sinne einer Überstruktur verstanden werden, die selber wiederum Unterabschnitte oder kleinere Flächen aufweist, die parallel zur Ober- oder Unterseite einer Betondecke ausgerichtet sein können. Die ersten Wandungsflächen sind z.B. entlang gemeinsamer Kanten oder über zweite Wandungsflächen miteinander verbunden.

Des weiteren wurde die Verwendung der erfindungsgemäßen Betondecke als Geschoßdecke oder als Bodenplatte für Gebäude gefunden. Außerdem wurde eine Rohrleitung gefunden sowie deren Verwendung für die Temperierung von insbesondere Betondecken.

Die ersten und zweiten betonfreien Hohlräume sind vorzugsweise alternierend, insbesondere unter Ausbildung einer Leitungseinheit, angeordnet. Dabei können zum Beispiel je zwei erste und zweite betonfreie Räume, insbesondere eine Vielzahl solcher Räume, in alternierender Anordnung miteinander verbunden sein.

Als Betondecken kommen alle gängigen, aus Beton gefertigten Geschoßdecken oder Bodenplatten in Frage. Bevorzugt wird auf Stahlbetondecken zurückgegriffen. Das erfindungsgemäße Betondeckensystem eignet sich aufgrund seiner mechanischen Eigenschaften unter anderem auch für Flachdecken sowie für Filigrandecken, kommt aber auch für Gebäudewände in Frage.

Vorzugsweise liegt unter der Oberfläche der Oberseite und/oder unter der Oberfläche der Unterseite der Betondecke eine Bewehrung bzw. Armierung vor. Besonders bevorzugt ist diese Bewehrung/Armierung unter- und/oder oberhalb der zweiten betonfreien Räume angebracht.

Betonfrei im Sinne der Erfindung soll bedeuten, daß diese Bereiche der Betondecke kein Beton aufweisen und zum Beispiel einen Hohlraum bilden können. Dieser (Hohl)Raum kann auch mit einem Material, das nicht Beton ist, vollständig oder teilweise ausgefüllt sein. Diese Räume können aber auch Gase und/oder Flüssigkeiten enthalten oder auch einen Unter- oder Überdruck aufweisen.

Erste und zweite betonfreie Räume unterscheiden sich u.a. dadurch, daß sie insbesondere in ihrer Querausdehnung eine unterschiedliche Größe aufweisen. Der obere oder untere Bereich der ersten betonfreien Räume ist demgemäß der Ober- bzw. Unterseite der Betondecke in der Regel näher als der obere oder untere Bereich der zweiten betonfreien Räume. Eine Unterscheidung läßt sich somit in erster Linie bereits über deren unterschiedliche Ausdehnung in Richtung auf die Ober- und Unterseite der Betondecke treffen. In einer bevorzugten Ausführungsform überdeckt der Querschnitt der ersten betonfreien Räume den Querschnitt der zweiten betonfreien Räume vollständig und geht über diesen hinaus. Der Querschnittsdurchmesser der ersten betonfreien Räume liegt im allgemeinen im Bereich von etwa 5 cm bis etw 50 cm, der der zweiten betonfreien Räume liegt im allgemeinen im Bereich von etwa 2 cm bis etwa 40 cm.

Die ersten betonfreien Räume verfügen vorzugsweise über mindestens zwei Wandungsflächen, die in einem Winkel zueinander stehen.

Diese Wandungsflächen der betonfreien Räume, insbesondere der ersten betonfreien Räume sind in einer Ausführungsform konkav oder konvex gewölbt. Der betonfreie Raum setzt sich hierbei aus zwei oder mehreren solcher Wandungsflächen zusammen. Demgemäß ist bei dieser Ausführungsibrm ein Richtungswechsel von einer Wandfläche zu der sich anschließenden Wandungsfläche unter Ausbildung eines betonfreien Raumes festzustellen. In dieser Ausführungsform weisen zumindest die ersten betonfreien Räume entlang des überwiegenden Teils ihrer Längsachse keinen kreissymmetrischen Querschnitt auf. Selbstverständlich sind auch solche Wandungsflächen mit umfaßt, die eine ebene Fläche darstellen.

Eine im wesentlichen ebene Wandungsfläche ist auch eine solche, die zwar in sich strukturiert sein kann und/oder zum Beispiel Auswölbungen oder Einbuchtungen aufweist, z.B. eine wellen- oder zackenförmige Wandungsfläche, deren Verlauf jedoch im ganzen entlang einer im wesentlichen ebenen Fläche ausgerichtet ist. Leichte Abweichungen von diesem ebenen Verlauf, d.h. geringfügige Biegungen dieser allein der Ausrichtung der Wandung dienenden ebenen Fläche, sind ebenfalls mit umfaßt.

In einer bevorzugten Ausgestaltung ist zu beachten, daß die ersten und/oder die zweiten betonfreien Räume wenigstens entlang eines Abschnitts, insbesondere mit einem im wesentlichen polygonalen Querschnitt, mindestens zwei, insbesondere drei, vier, fünf oder mehr, erste Wandungsflächen umfassen, die nicht im wesentlichen parallel oder senkrecht zur Unter- und/oder Oberseite der Betondecke ausgerichtet sind.

Weiterhin ist erfindungsgemäß vorgesehen, daß die ersten und/oder zweiten, insbesondere die ersten, betonfreien Räume zumindest entlang eines Abschnitts über eine im wesentlichen ebene, wellenförmige, konvexe und/oder konkave zweite Wandungsfläche und/oder eine, insbesondere abgeschnittene, abgerundete und/oder profilierte, Kante verfügen, die im wesentlichen parallel zur Oberseite der Betondecke ausgerichtet ist und/oder insbesondere im Durchschnitt einen geringeren Abstand zur Oberseite aufweist als die ersten Wandungsflächen von ersten und/oder zweiten betonfreien Räumen und/oder zumindest entlang eines Abschnitts über eine im wesentlichen ebene, wellenförmige, konvexe und/oder konkave zweite Wandungsfläche und/oder eine, insbesondere abgeschnittene, abgerundete und/oder profilierte, Kante verfügen, die im wesentlichen parallel zur Unterseite der Betondecke ausgerichtet ist und/oder insbesondere im Durchschnitt einen geringeren Abstand zur Unterseite aufweist als die ersten Wandungsflächen von ersten und/oder zweiten betonfreien Räumen. Neben den zweiten Wandungsflächen stellen die ersten Wandungsflächen dann z.B. die übrigen Wandungsflächen dar.

Dabei kann vorgesehen sein, daß mindestens eine Kante des Abschnitts des ersten und/oder zweiten betonfreien Raums mit im wesentlichen polygonalem Querschnitt derart ausgerichtet ist, daß diese überwiegend, insbesondere ausnahmslos, einen geringeren Abstand zur Unterseite der Betondecke aufweist als die sich an diese Kante anschließenden Wandungs- bzw. Kantenflächen und/oder daß eine weitere Kante dieses Abschnitts überwiegend, insbesondere ausnahmslos, einen geringeren Abstand zur Oberseite der Betondecke aufweist als die sich an diese Kante anschließenden Wandungs- bzw. Kantenflächen. Die Kanten können z.B. scharfkantig, nahezu scharfkantig oder auch abgerundet bzw. mehr oder weniger stark abgeflacht ausgebildet sein. Diese Kanten zeichnen sich im wesentlichen dadurch aus, daß bei diesen in einem bestimmten Winkel zueinander stehende Wandungsflächen, insbesondere ebene, konkave und/oder konvexe, die in sich auch strukturiert sein können, aufeinandertreffen.

In einer weiteren, bevorzugten Ausgestaltung zeichnet sich eine erfindungsgemäße Betondekke dadurch aus, daß die ersten und/oder zweiten, insbesondere die ersten, betonfreien Räume zumindest entlang eines Abschnitts über eine im wesentlichen ebene, wellenförmige, konvexe und/oder konkave Wandungsfläche verfügen, die im wesentlichen parallel zur Oberseite der Betondecke ausgerichtet ist, und insbesondere im Durchschnitt einen geringeren Abstand zur Oberseite aufweist als die übrigen Wandungsflächen und/oder über eine im wesentlichen ebene, wellenförmige, konvexe und/oder konkave Wandungsfläche verfügen, die im wesentlichen parallel zur Unterseite der Betondecke ausgerichtet ist und insbesondere im Durchschnitt einen geringeren Abstand zur Unterseite aufweist als die übrigen Wandungsflächen.

Die erfindungsgemäße Betondecke verfügt regelmäßig über eine Unter- und eine Oberseite, wobei die Dicke der Betondecke, d.h. der Abstand zwischen Unter- und Oberseite auch innerhalb einer Betondecke variieren kann. Auch haben Unter- und Oberseite nicht notwendigerweise im wesentlichen parallel zueinander ausgerichtet zu sein. Geeignete Betondecken verfügen üblicherweise über eine Dicke im Bereich von etwa 10 bis 60 cm, insbesondere im Bereich von etwa 15 bis 40 cm.

Erfindungsgemäße Betondecken verfügen über erste und zweite betonfreie Räume, die vorzugsweise im Kern der Betondecke vorliegen. Die ersten und zweiten betonfreien Räume sind vorzugsweise derart angeordnet, daß eine Armierung oder Bewehrung ohne Probleme mit herkömmlichen Mitteln möglich ist.

Bevorzugt liegen erste betonfreie Räume und zweite betonfreie Räume, zumindest abschnittsweise, alternierend aufeinanderfolgend in der Betondecke gemäß der Erfindung vor.

Dabei ist es von Vorteil, wenn insbesondere die aufeinanderfolgenden ersten und zweiten betonfreien Räume miteinander, insbesondere unter Ausbildung eines Leitungs- bzw. Kanalsystems, verbunden sind.

Der Übergang von ersten zu zweiten betonfreien Räumen und umgekehrt geschieht in der Regel über sich verjüngende bzw. sich verbreiternde Wandelemente, die einen weiteren, dritten betonfreien Raum umschreiben. Diese verbindenden Wandelemente können in einer bevorzugten Ausführungsform die Form von Kegelstümpfen annehmen. Diese verbindenden Wandelemente können darüber hinaus, wie für die Wandungsflächen der ersten und zweiten betonfreien Räume beschrieben, in sich strukturiert sein und z.B. Einbuchtungen und Auswölbungen bzw. Sicken aufweisen.

In einer alternativen Ausgestaltung der Erfindung sind die ersten und zweiten betonfreien Räume mit im wesentlichen zylindrischem Querschnitt ausgestaltet und über kegelstumpfförmige verbindende Wandelemente, wie vorangehend beschrieben, miteinander zu einem Kanalsystem verbunden. Dieses Kanalsystem verfügt bevorzugt über mindestens eine Einlaßöffnung und mindestens eine Auslaßöffnung.

Des weiteren ist es selbstverständlich auch möglich, wenn erste und zweite betonfreie Räume, die nicht aufeinanderfolgen, sondern zum Beispiel nebeneinander vorliegen, über Seitenkanäle miteinander verbunden sind. Diese Seitenkanäle können insbesondere auch einen zweiten betonfreien Raum umfassen, der beispielsweise eine direkte Verbindung zwischen zwei ersten betonfreien Räumen herstellen kann.

In einer weiteren Ausführungsform sieht die vorliegende Erfindung vor, daß die betonfreien Räume einen Kunststoff, insbesondere einen geschäumten Kunststoff enthalten. Als geeignete Kunststoffe kommen zum Beispiel Polyurethanschäume in Frage.

Besonders bevorzugt, insbesondere wenn die ersten und zweiten betonfreien Räume nicht vollständig mit einem Material wie Kunststoff ausgefüllt sind, ist vorgesehen, daß die betonfreien Räume oder Teile davon ein Gas und/oder ein Fluid enthalten, wobei diese betonfreien Räume insbesondere mit diesem Gas und/oder Fluid durchströmbar sind. Als geeignete Gase kommen beispielsweise Luft oder insbesondere inerte Gase wie Stickstoff oder Argon in Betracht. Unter geeignete Fluide fallen u.a. Wasser sowie mit Salz gesättigtes Wasser, das auch als Sole bezeichnet wird. Bevorzugt wird auf Gase und Fluide mit einer großen Wärmekapazität zurückgegriffen, besonders bevorzugt auf Luft. Über die Durchleitung kühler Nachtluft durch das Leitungssystem der erfindungsgemäßen Betondecken gelingt regelmäßig bereits eine beträchtliche Abkühlung der gesamten Decken und damit auch der angrenzenden Räume.

In einer weiteren Ausführungsform kann das Leitungssystem über Durchlaßöffnungen durch die Betondecke mit den darunter und/oder darüber liegenden Räumen in Verbindung stehen. Auf diese Weise kann kühle Luft in die Gebäudeinnenräume gelangen und aufgeheizte Luft abgeführt werden.

Um ein Durchströmen der betonfreien Räume mit Gas und/oder Fluid besonders wirkungsvoll zu gestalten, sieht eine Ausgestaltung der Erfindung vor, daß das in der Betondecke vorliegende Leitungs- bzw. Kanalsystem mindestens eine Einlaß- und mindestens eine Auslaßöffnung umfaßt. Dabei kann das Leitungssystem auch derart gestaltet sein, daß Ein- und Auslaß sich unmittelbar nebeneinander befinden, wenngleich dieses für das Gelingen der Erfindung nicht unbedingt erforderlich ist. Des weiteren kann insbesondere im Bereich der Einlaßöffnung ein Filter vorgesehen sein.

Ein weiterer vorteilhafter Aspekt der Erfindung berücksichtigt, daß die, insbesondere alternierend mit zweiten betonfreien Räumen angeordneten, ersten betonfreien Räume in Form und/oder Größe im wesentlichen übereinstimmen und/oder daß mindestens zwei aufeinanderfolgende, durch einen zweiten betonfreien Raum miteinander verbundene erste betonfreie Räume über eine im wesentlichen einheitliche Querschnittsform, insbesondere entlang der Verbindungsachse, verfügen, wobei insbesondere diese ersten betonfreien Räume in Bezug auf ihre Querschnittsform im wesentlich gleichförmig ausgerichtet sind. Gleichförmig oder auch gleichsinnig umfaßt im vorliegenden Fall auch eine vollständig einheitliche Anordnung von ersten betonfreien Räumen, so daß z.B. gleichartige Wandungsflächen im wesentlichen einen einheitlichen Winkel zu einer horizontalen oder vertikalen Ebene aufweisen.

In einer weiteren Ausführungsform sieht die vorliegende Erfindung vor, daß zumindest eine Wandungsfläche der ersten und/oder zweiten, vorzugsweise ersten, betonfreien Räume wenigstens abschnittsweise, innen- und/oder außenseitig, mindestens zwei aufeinanderfolgende, durch eine Auswölbung getrennte Einbuchtungen aufweist, welche sich im wesentlichen über den gesamten Umfang des Querschnitts, vorzugsweise in im wesentlichen paralleler Ausrichtung, erstrecken. Bevorzugt verfügen die ersten betonfreien Räume über die gesamte Fläche im periodischen Wechsel aufeinanderfolgende Einbuchtungen und Auswölbungen. Eine wirksame Temperierung wird üblicherweise bereits dann erreicht, wenn sich die Einbuchtungen nicht in Richtung der Mitte des betonfreien Raumes erstrecken.

Als besonders vorteilhaft hat sich herausgestellt, daß insbesondere die Querschnitte der ersten betonfreien Räume zumindest abschnittsweise im wesentlichen die Form eines Drei-, Vier-, Fünf-, Sechs-, Sieben- oder Achtecks, insbesondere die Form eines Quadrats, Trapezes oder Rechtecks ausbilden.

Darüber hinaus wird erfindungsgemäßen vorgeschlagen, daß die Querschnitte der zweiten betonfreien Räume im wesentlichen kreis- oder ellipsenförmig ausgebildet sind.

Alternativ wird erfindungsgemäß eine Betondecke, insbesondere temperierbare Betondecke, umfassend eine Ober- und eine Unterseite, vorgeschlagen, wobei in dieser Betondecke erste betonfreie Räume, insbesondere erste Hohlräume, und zweite betonfreie Räume, insbesondere zweite Hohlräume, enthalten sind, die miteinander, insbesondere unter Ausbildung eines vorzugsweise mindestens eine Einlaß- und mindestens eine Auslaßöffnung aufweisenden Kanalsystems, verbindbar oder verbunden sind und alternierend aufeinanderfolgend vorliegen, wobei besagte erste betonfreie Räume einen kleineren und/oder größeren, vorzugsweise größeren, maximalen Durchmesser im Querschnitt haben als besagte zweite betonfreie Räume und wobei besagte erste und zweite betonfreie Räume im wesentlichen eine zylindrische Form aufweisen und über kegelstumpfförmige Wandelemente miteinander verbindbar bzw. verbunden sind.

Soweit die Überstruktur der alternierenden ersten und zweiten betonfreien Räume betroffen ist, hat es sich als zweckmäßig erwiesen, wenn alternierend aufeinanderfolgende betonfreie erste und zweite Räume im wesentlichen entlang einer geraden oder gekrümmten Linie angeordnet sind. Diese miteinander verbundenen ersten und zweiten betonfreien Räume bilden vorzugsweise ein Segment des Leitungssystems. Zwei oder mehrere Leitungssegmente können dazu genutzt werden, die erfindungsgemäße Betondecke unter Anwendung eines geometrischen Ordnungsschemas mit einem vorzugsweise nicht verzweigten Leitungssystem zu versehen.

Dabei können Betondecken sich dadurch auszeichnen, daß mindestens zwei Leitungssegmente im wesentlichen parallel zueinander verlaufen, wobei diese Leitungssegmente insbesondere über zweite betonfreie Räume verbindbar bzw. verbunden sind. Daneben ist häufig auch eine rechtwinklige Anordnung dieser Leitungssegmente zweckdienlich.

In einer weiteren Ausgestaltung der Erfindung ist vorgesehen, daß mindestens drei, insbesondere eine Vielzahl, an ersten und zweiten betonfreien Räumen aufeinanderfolgend, insbesondere alternierend, angeordnet sind, insbesondere unter Ausbildung einer Leitung oder einer Leitungseinheit. Vorteilhafterweise sind mehrere erste und zweite betonfreie Hohlräume alternierend in Folge angeordnet. Beispielsweise kann ein erster Leitungsstrang aus 10, 20, 50 oder 100 oder einer beliebigen kleineren oder größeren Zahl an alternierenden ersten und z weiten Hohlräumen gebildet werden. Ein entsprechender zweiter Leitungsstrang kann mit dem vorgenannten ersten Leitungsstrang verbunden sein und z.B. parallel zu diesem oder im wesentlichen parallel zu diesem verlaufen. Setzt man diese Anordnung mit weiteren entsprechend gestalteten Leitungssträngen fort, erhält man eine sehr effektive Anordnung von alternierenden ersten und zweiten Hohlräumen in einer temperierbaren Betondecke. Selbstverständlich können die jeweiligen Leitungsstränge auch nicht im wesentlichen parallel zueinander angeordnet sein.

Eine weitere, zweckmäßige Ausgestaltung der erfindungsgemäße Betondecke sieht vor, daß eine, insbesondere abgeflachte oder nach innen gewölbte, Schmalseite der ersten und/oder zweiten betonfreien Räume der Ober- und/oder Unterseite der Betondecke zugewandt ist bzw. sind. Es hat sich als besonders vorteilhaft herausgestellt, wenn zumindest die ersten betonfreien Räume bzw. Hohlräume auf einer Kante, Schmalseite oder einem abgerundeten Rand stehend in eine Betondecke eingebettet sind. Dabei kann vorgesehen sein, daß zur besseren Stabilisierung, insbesondere bei der Fertigung der erfindungsgemäßen Betondecken, diese Kanten, Ränder oder Schmalseiten mindestens eine in Richtung des Hohlrauminneren ausgebildete Einbuchtung aufweisen. Vorzugsweise sind bei den erfindungsgemäßen Betondecken sämtliche ersten betonfreien Räume und/oder sämtliche zweiten freien betonfreien Räume jeweils im wesentlichen identisch in Form und Größe ausgestaltet. Des weiteren hatte sich als zweckmäßig erwiesen, wenn nicht nur ein unterer Rand, Kante oder Schmalseite der Unterseite der Betondecke zugewandt ist, sondern wenn gleichzeitig auch ein oberer Rand, eine obere Kante oder Schmalseite der Oberseite der Betondecke zugewandt ist. Dabei können in einer Ausführungsform der erfindungsgemäßen Betondecken über insbesondere erste Hohlräume verfügen mit einem Querschnitt in Form eines Rechtecks, Quadrats oder Parallelogramms, wobei selbstverständlich von diesen Querschnittsformen auch solche umfaßt sein sollen, deren Ecken abgeflacht bzw. abgeschnitten sind und/oder über nach innen gewandte Einbuchtungen verfügen. Selbstverständlich sind auch Querschnittsformen eines Dreiecks oder von sonstigen polygonalen Gebilden geeignet. Mit der Anordnung der so zu sagen auf Kante gestellten ersten betonfreien Räume läßt sich ein überraschender Steifigkeitsgewinn der erfindungsgemäßen Betondecken erzielen, was um so erstaunlicher ist, als dieser Effekt sich selbst bei einer sehr dichten Packung an, insbesondere alternierenden, ersten und zweiten betonfreien Hohlräumen einstellt.

Die erfindungsgemäßen Betondecken können auf unterschiedlichste Weise hergestellt werden. Ein Verfahren besteht zum Beispiel darin, daß man Hohlkörper in die zu fertigende Betondecke, beispielsweise zwischen Bewehrungsmatten, einlegt und mit noch nicht erhärtetem Beton umgibt. Diese Hohlkörper definieren im wesentlichen die Form und Größe der ersten und zweiten betonfreien Räume. Diese Hohlkörper können zum Beispiel Metall- und/oder Kunststoffwandungen aufweisen. In einer Ausgestaltung sind die einzubettenden Hohlkörper selbsttragend, werden also vom Gewicht des sie einbettenden Betons sowie dem Gewicht der gegebenenfalls aufliegenden Bewehrung nicht merklich verformt. Hierfür kommen insbesondere entsprechend vorgeformte Körper aus Metall oder Kunststoff, jeweils in hinreichender Dicke, in Betracht. Entsprechende Hohlkörper aus Kunststoff, vorzugsweise Polypropylen, Polyethylen oder coextrudiertem Polyethylen, können zum Beispiel mittels Blasformens erhalten werden. Insbesondere wenn die Hohlkörper für erste und zweite betonfreie Räume ein durchgängiges Leitungssystem bilden, ist hierbei von Vorteil, daß das Leitungssystem keine Naht und somit auch keine mögliche Sollbruchstelle aufweist.

In einer weiteren Ausgestaltung kann für die Herstellung der ersten und zweiten betonfreien Räume auch auf nicht selbsttragende Hohlkörper zurückgegriffen werden. Beispielsweise kommen hierfür mit Luft oder Gas gefüllte, verschließbare Behältnisse in Betracht, die vorzugsweise einen erhöhten Innendruck aufweisen. Diese Behältnisse nehmen die Form der in der Betondecke auszuformenden ersten und zweiten betonfreien Räume ein. Nach dem Erhärten des Betons ist es nicht mehr erforderlich, den Druck in diesen Behältnissen aufrechtzuerhalten. Insbesondere wenn diese nichttragenden Behältnisse ein Leitungssystem formen, können durch die betonfreien Räume Luft, Gase oder Flüssigkeiten zirkulieren. Geeignete Materialien für die nichttragenden Behältnisse stellen zum Beispiel Folien dar, die auch unter Druck zumindest für einen bestimmten Zeitraum, der für die Erhärtung des Betons ausreicht, gas- bzw. luftdicht sind. Selbstverständlich kommen auch aus mehreren Folienschichten bestehende Laminate, wie z.B. von Luftmatratzen bekannt, in Betracht.

Eine weiteres Herstellverfahen zeichnet sich dadurch aus, daß betonfreie Formkörper, vorzugsweise geringer Dichte, in Form der ersten und zweiten betonfreien Räume, die keine Hohlkörper umfassen, in die Betondecke eingearbeitet werden. Geeignete Materialien für diese Formkörper umfassen zum Beispiel geschäumte Systeme wie Polymerschäume, z.B. Polyurethanschäume. Auch kann auf geschäumtes bzw. expandiertes Polystyrol, auch unter den Markenbezeichnungen Styropor® und Styrodur® bekannt, zurückgegriffen werden. Diese Formkörper können in einem gefertigt sein oder aus einer Vielzahl einzelner kleinerer Formkörper, z.B. in Form von Kugeln, Bällen oder Schnipseln, zusammengesetzt sein und den betonfreien Raum bilden.

In einer Ausführungsform der Erfindung wird eine Rohrleitung bzw. ein Rohrleitungssystem in die Betondecke eingebettet.

Demgemäß umfaßt die vorliegende Erfindung auch eine Rohrleitung für die Verwendung in einer Betondecke, insbesondere mit mindestens einem Rohreinlaß und mindestens einem Rohrauslaß, wobei mindestens zwei, insbesondere mindestens 10, alternierend aufeinanderfolgende erste und zweite Rohrabschnitte, wobei besagte Rohrleitung wenigstens entlang eines ersten Rohrabschnitts einen Rohrquerschnitt mit polygonaler oder nahezu polygonaler Querschnittsfläche umfaßt, wobei der Durchmesser des Querschnitts der zweiten Rohrabschnitte der Rohrleitung zwischen aufeinanderfolgenden ersten Rohrabschnitten kleiner ist als der größtmögliche Querschnittsdurchmesser dieser ersten Abschnitte, wobei wenigstens eine Wandungsfläche mindestens eines, insbesondere einer Vielzahl an, ersten und/oder zweiten Rohrabschnitts zumindest abschnittsweise in Längsrichtung der Rohrleitung mindestens eine Einbuchtung in Richtung auf das Innere der Rohrleitung aufweist oder wenigstens ein Kantenabschnitt mindestens eines, insbesondere einer Vielzahl an, ersten und/oder zweiten Rohrabschnitts abgerundet, abgeflacht und/oder profiliert vorliegt.

Dabei kann gemäß einer zweckmäßigen Ausgestaltung vorgesehen sein, daß die, insbesondere alternierend mit zweiten Rohrabschnitten angeordneten, ersten Rohrabschnitte in Form und/oder Größe im wesentlichen übereinstimmen und/oder daß mindestens zwei aufeinanderfolgende, durch einen zweiten Rohrabschnitt miteinander verbundene erste Rohrabschnitte über eine im wesentlichen einheitliche polygonale Querschnittsform, insbesondere entlang der Verbindungsachse, verfügen, wobei insbesondere diese ersten Rohrabschnitte in Bezug auf ihre Querschnittsform im wesentlich gleichförmig ausrichtbar bzw. ausgerichtet sind.

Die in die Betondecke eingebettete Rohrleitung bzw. das eingebettete Rohrleitungssystem können aus z.B. Metall, insbesondere einem wärmeleitenden Metall bzw. einer entsprechenden Metalllegierung, aus einem Kunststoff, vorzugsweise Polyethylen oder Poly propylen, oder einem aus Ton gebrannten Material gefertigt sein. Die Rohrleitung bzw. das Rohrleitungssystem verfügen in einer bevorzugten Ausführungsform über mindestens einen ersten Abschnitt, der einen polygonalen Rohrquerschnitt, z.B. in Form eines Drei-, Vier-, Fünf-, Sechs-, Sieben- oder Achtecks aufweist, wobei ein rechteckiger, quadratischer oder trapezförmiger bzw. ein nahezu rechteckiger, quadratischer oder trapezförmiger Rohrquerschnitt bevorzugt ist. Die Kanten dieser ersten Rohrabschnitte können scharfkantig, abgerundet und/oder mehr oder weniger stark abgeflacht ausgebildet sein. Eine weitere erfindungsgemäße Ausgestaltung einer zum Temperieren von Betondecken verwendbaren Rohrleitung zeichnet sich dadurch aus, daß wenigstens eine Wandungsfläche eines ersten und/oder zweiten, insbesondere ersten, Rohrabschnitts zumindest abschnittsweise in Längsrichtung des Rohres mindestens eine Einbuchtung in Richtung auf das Innere der Rohrleitung aufweist. Weiterhin bevorzugt sind solche Rohrleitungen, bei denen wenigstens zwei Wandungsflächen eines ersten und/oder zweiten, insbesondere ersten, Rohrabschnitts im wesentlichen parallel zueinander ausgerichtet sind, wobei mindestens eine dieser Wandungsflächen wenigstens abschnittsweise in Längsrichtung des Rohres mindestens eine Einbuchtung in Richtung auf das Innere der Rohrleitung aufweist. Die vorhergehend beschriebenen Rohrabschnitte bilden vorzugsweise die ersten betonfreien Räume.

Diese Rohrabschnitte mit polygonalem Querschnitt zeichnen sich in einer weiteren, vorteilhaften Ausgestaltung dadurch aus, daß sie innenseitig und/oder außenseitig, vorzugsweise innenseitig, mindestens zwei aufeinanderfolgende, durch eine Auswölbung getrennte Einbuchtungen aufweisen, die sich im wesentlichen über den gesamten Umfang des Rohrquerschnitts, vorzugsweise in im wesentlichen paralleler Ausrichtung, erstrecken. Bevorzugt verfügen diese ersten Rohrabschnitte innenseitig über die gesamte Fläche im periodischen Wechsel aufeinander folgende Einbuchtungen und Auswölbungen. In einer weiteren, bevorzugten Ausführungsform sind in entsprechender Weise ausgestaltete Einbuchtungen und Auswölbungen auch auf der Außenseite dieser Rohrabschnitte zu finden. Die Herstellung dieser Rohrabschnitte kann dadurch vereinfacht werden, daß die innenseitigen Einbuchtungen mit den Auswölbungen auf der Außenseite korrespondieren und vice versa. Um beim Durchströmen der Rohrleitung mit einem Fluid eine wirksame Temperierung der Betondecke zu erzielen, ist es nicht notwendigerweise erforderlich, die innenseitigen Einbuchtungen in Richtung zur Rohrmitte zu führen.

An die vorhergehend beschriebenen, die ersten betonfreien Räume umfassenden Rohrabschnitte mit polygonalem Querschnitt schließen sich in der Regel zu beiden Seiten Teilstücke an, die über einen geringeren Durchmesser verfügen als besagte erste Rohrabschnitte. Zweckmäßigerweise ist der Durchmesser des Querschnitts des Teilstücks der Rohrleitung zwischen den ersten Rohrabschnitten kleiner als der größtmögliche Querschnittsdurchmesser dieser zweiten Rohrabschnitte.

Zwar können auch diese sich anschließenden zweiten Teilstücke innen- und/oder außenseitig in gleicher Weise wie die genannten Rohrabschnitte mit polygonalem Querschnitt mit einer Abfolge von Einbuchtungen und Auswölbungen versehen sein. Dieses ist jedoch nicht unbedingt erforderlich. In einer pragmatischen und für die Installation der Rohrleitung günstigen Ausgestaltung ist der Querschnitt dieser Teilstücke kreis- oder ellipsenförmig.

Die ersten Rohrabschnitte mit vorzugsweise polygonalem Querschnitt sowie die sich anschließenden Rohrteilstücke können in beliebiger Anzahl aufeinander folgen und die Rohrleitung oder ein Segment dieser Rohrleitung bilden. Diese Rohrabschnitte wiederholen sich im allgemeinen entlang der Rohrleitung in identischen oder nahezu identischen Abständen, können aber auch, z.B. durch bauliche Vorgaben bedingt, unregelmäßige Abstände aufweisen. Zwar ist es möglich, für jeden der besagten Rohrabschnitte eine beliebige polygonale Querschnittsform zu wählen, allerdings hat es sich als zweckmäßig erwiesen, für ein in eine Betondecke eingebettetes Rohrleitungssystem einen einheitlichen polygonalen Rohrquerschnitt für erste betonfreie Räume bildende Rohrabschnitte zu wählen. Beispielsweise können zwei oder mehrere, insbesondere aufeinanderfolgende Rohrabschnitte entlang einer Rohrleitung übereinstimmende oder nahezu übereinstimmende Rohrquerschnitte aufweisen. Bei Rohrabschnitten für erste betonfreie Räume mit quadratischem, trapezförmigem oder rechteckigem Rohrquerschnitt hat es sich als vorteilhaft herausgestellt, wenn eine der Diagonalen dieses Rohrabschnitts im wesentlichen parallel zur Ober- und/oder Unterseite der Betondecke ausgerichtet ist.

Die sich an die erste betonfreie Räume bildenden Rohrabschnitte anschließenden zweiten Rohrteilstücke werden in der Regel mit einem weiteren, sich an einem benachbarten ersten Rohrabschnitt befindlichen Rohrteilstück zusammengefügt. Diese durch zwei Rohrteilstücke zwischen zwei Rohrabschnitte mit im wesentlichen polygonalen Querschnitt gebildeten Bereiche stellen zweite betonfreie Räume dar.

Die aus mehreren Rohrabschnitten zusammengesetzten Rohrleitungssegmente können in beliebiger Weise zueinander angeordnet sein. Bevorzugt werden diese Segmente rechtwinklig zueinander, besonders bevorzugt parallel zueinander geführt. Dazu werden die vorzugsweise geradlinigen Rohrleitungssegmente über in entsprechender Weise gekrümmte Rohrteilstücke bzw. gekrümmte zweite betonfreie Räume miteinander verbunden.

Das in die Betondecke eingebettete Rohrleitungssystem verfügt vorzugsweise über mindestens einen Rohreinlaß und mindestens einen Rohrauslaß, über welche Luft, Gas oder ein Fluid wie Wasser zwecks Temperierung in das Rohrleitungssystem ein- und wieder ausgeführt wird. Die beschriebene Ausgestaltung der erfindungsgemäßen ersten und zweiten betonfreien Räume, insbesondere Rohrleitungssysteme, ermöglicht es, überraschenderweise bereits mit Luft Betondecken wirksam und nachhaltig zu temperieren. Dazu kann beispielsweise Au-ßenluft, z.B. mit Hilfe eines Ventilators durch das Rohrleitungssystem geleitet werden. Gleichfalls ist es möglich, Luft vor Beginn der Einleitung entsprechend vorzukondinionieren. Demgemäß kann gekühlte, erwärmte oder von Feuchtigkeit befreite Luft oder auch zusätzlich mit Feuchtigkeit beladene Luft durch das Rohrleitungssystem geleitet werden. Geeignete Vorrichtungen mit deren Hilfe dieses bewerkstelligt werden kann, sind dem Fachmann bekannt. Gleichfalls kann das Rohleitungssystem, insbesondere im Bereich des Einlasses, mit mindestens einem Filter ausgestattet sein. Daneben können auch Flüssigkeiten als Wärmeübertragungsmedium durch das erfindungsgemäße Rohrleitungssystem geleitet werden. Ein geeignetes flüssiges Medium ist z.B. Wasser. Zwecks Temperierung der Betondecke können diese flüssigen Medien in entsprechender Weise gekühlt oder erwärmt durch das Rohrleitungssystem geleitet werden.

In einer besonders bevorzugten Ausgestaltung der Erfindung setzt sich das Rohrleitungssystem aus einer oberen- und einer unteren Hälfte zusammen, die beispielsweise über geeignete Flansche miteinander verbindbar bzw. verbunden sind. Insbesondere wenn die vorgenannten Rohrabschnitte beispielsweise über einen quadratischen, trapezförmigen oder rechteckigen Querschnitt verfügen, kann die Rohrleitung z.B. entlang einer Diagonalen auf einfache Weise in zwei Rohrhälften getrennt sein. Auf diese Weise können die jeweiligen Rohrhälften z.B. beim Transport platzsparend ineinander gelegt werden.

In einer weiteren bevorzugten Ausgestaltung der Erfindung setzt sich das Rohrleitungssystem aus Rohrelementen zusammen, die aus den besagten Rohrabschnitten mit polygonalem Querschnitt sowie aus am Eingang und am Ausgang dieser Abschnitte befindlichen Rohrteilstükken gebildet werden. Diese Elemente können auf sehr einfache Weise miteinander verbunden werden, z.B. indem die jeweiligen Teilstücke ineinander gesteckt werden, um ein Rohrleitungssegment oder gleich das gesamte Rohrleitungssystem zu bilden.

In einer weiteren, bevorzugten Ausführungsform der Erfindung können die beiden vorhergehend beschrieben Ausgestaltungen der Erfindung miteinander kombiniert vorliegen. Danach werden Rohrelemente eingesetzt, die sich aus zwei beispielsweise über Flansche verbindbare Rohrhälften zusammensetzen.

Weitere Ausführungsformen der Erfindung werden anhand der nachfolgenden Abbildungen im Detail beschrieben, ohne daß die Erfindung auf diese besonderen Ausgestaltungen beschränkt sein soll. Es zeigt:
- Fig. 1: eine perspektivische Seitenansicht zweier erfindungsgemäßer Geschoßdecken im Schnitt,
- Fig. 2: eine Frontalansicht einer erfindungsgemäßen Betondecke im Querschnitt,
- Fig. 3: eine perspektivische Seitenansicht zweier erfindungsgemäßer Geschoßdecken im Schnitt,
- Fig. 4: eine erfindungsgemäße Rohrleitung aus Ober- und Unterschalen in perspektivischer Draufsicht,
- Fig. 5, 6: zwei Ausführungsformen von die die Rohrleitung nach Fig. 4 bildenden Schalenhälften in perspektivischer Draufsicht,
- Fig. 7: eine Seitenansicht eines Abschnitts einer erfindungsgemäßen Rohrleitung,
- Fig. 8a, 8b: Querschnittsansichten entlang der Schnitte A-A und B-B gemäß Fig. 5, und
- Fig. 9: eine alternative erfindungsgemäße Rohrleitung.

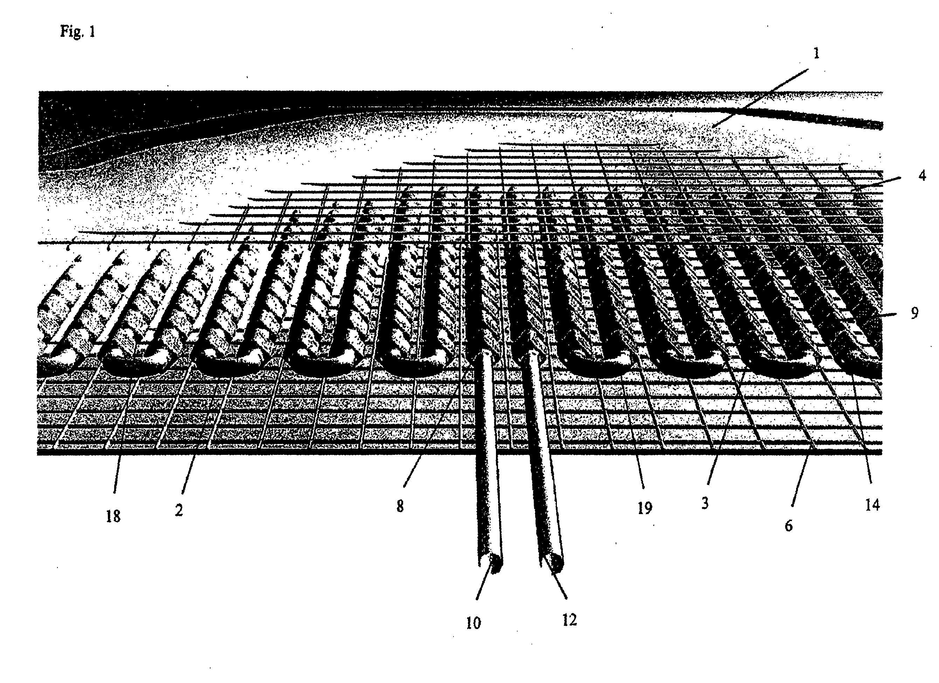

Wie in Fig. 1 gezeigt, kann eine erfindungsgemäße Betondecke 1 über eine obere Bewehrung 4 und eine untere Bewehrung 6 verfügen. Zwischen oberer Bewehrung 4 und unterer Bewehrung 6 befindet sich das erfindungsgemäß ausgestaltete Rohrleitungssystem 2, enthaltend einen Einlaß 10 und einen Auslaß 12. Das Leitungssystem 2 setzt sich aus einer Vielzahl parallel zueinander angeordneter, geradliniger Leitungssegmente 14 zusammen, die wiederum eine Vielzahl an aufeinanderfolgenden ersten betonfreien Räumen 8 umfassen. Diese betonfreien Räume verfügen jeweils über vier im wesentlichen ebene Wandungsflächen 3, die nicht parallel oder senkrecht zur Unter- und Oberseite der Betondecke ausgerichtet sind. Die einzelnen ersten Rohrabschnitte 8 sind innerhalb der geradlinigen Leitungssegmente 14 über geradlinige Teilstücke 18 miteinander verbunden. Die jeweiligen parallelen Leitungssegmente 14 stehen über gekrümmte Teilstücke 19 miteinander in Verbindung. Die Teilstücke 18, 19 bilden jeweils zweite betonfreie Räume der erfindungsgemäßen Betondecke 1.

Durch das in Fig. 1 abgebildete Leitungssystem 2 kann die Betondecke 1 beispielsweise mittels Durchleitens von kühler Nachtluft ohne weitere Konditionierung temperiert werden. Die zum Kühlen bzw. Temperieren verwendete Luft kann, nachdem sie eine Temperatur erreicht hat, bei der eine effiziente Kühlung nicht mehr möglich ist, wieder nach außen geleitet werden. Des weiteren ist es möglich, über das abgebildete Leitungssystem 2 geleitete vorkonditionierte Luft, insbesondere nachdem sie über das Leitungssystem durch die Decke geführt worden ist, einem Raum zuzuleiten. Mittel zum Regulieren des Drucks, der Geschwindigkeit und der Temperatur der durch das Leitungssystem 2 geleiteten Luft sind dem Fachmann bekannt. Im allgemeinen reicht bei der erfindungsgemäßen Betondecke bereits eine Luftdurchströmungsgeschwindigkeit von etwa 1.5 m/sec für eine angemessene Temperierung aus.

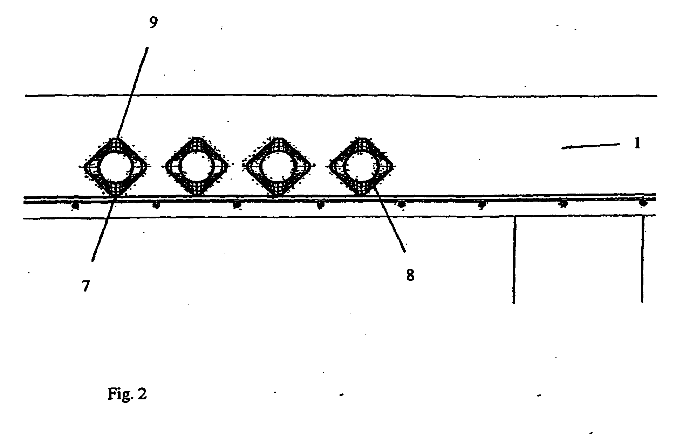

Wie bereits aus Fig. 1 zu erkennen, verfügen die ersten betonfreien Räume 8 über einen im wesentlichen quadratischen Querschnitt mit stark abgerundeten Kanten, wobei sich gegenüberliegende abgerundete Kanten 7, 9 der Unter- bzw. Oberseite der Betondecke am nächsten sind. Alle ersten betonfreien Räume 8 sind in dem Rohrleitungssystem 2 nach Fig. 1 in gleicher Weise ausgerichtet. Dieses ist auch Fig. 2 zu entnehmen, in der vier parallel nebeneinander angeordnete erste betonfreie Räume 8 im Querschnitt zu sehen sind. Die Diagonalen zwischen den sich gegenüberliegenden Kanten, die nicht der Ober- bzw. Unterseite der Betondecke zugewandt sind, liegen mehr oder weniger in einer Ebene und sind im wesentlichen parallel zur Ober- bzw. Unterseite der Betondecke ausgerichtet. Die Deckendicke liegt bei etwa 30 cm, wobei die maximale horizontale Ausdehnung der ersten betonfreien Räume 8 bei etwa 18 cm liegt. Als Abstand zur Ober- bzw. Unterseite der Betondecke können dabei noch jeweils etwa 6 cm an Betonschicht verbleiben. Ferner, wie in Fig. 2 gezeigt, kann das Rohrleitungssystem auch näher zur Unterseite angebracht sein.

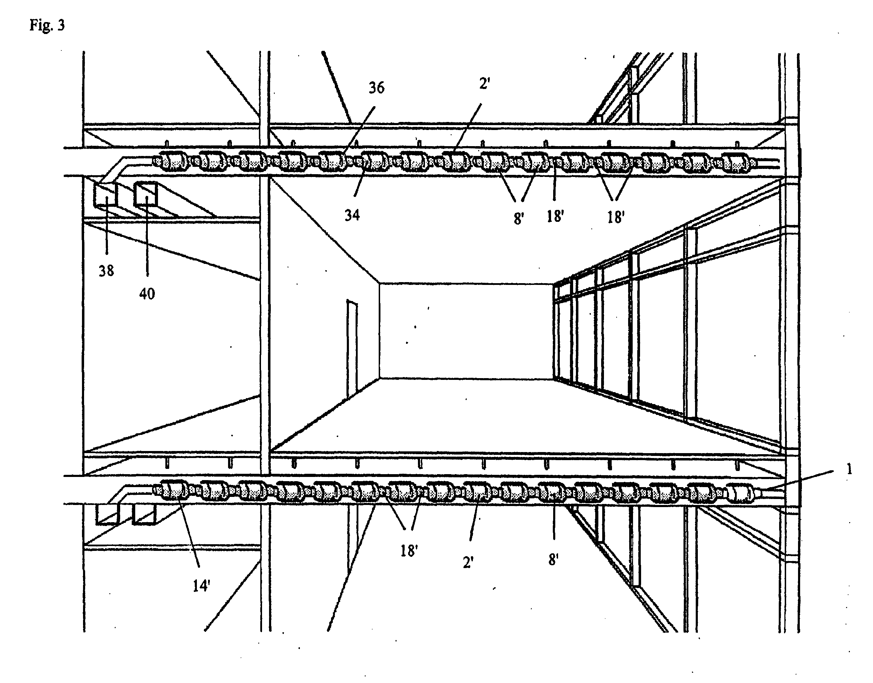

Fig. 3 ist eine perspektivische Seitenansicht zweier erfindungsgemäßer Geschoßdecken 1' als Schnittzeichnung durch ein Gebäude zu entnehmen. Alternierend aufeinanderfolgende erste und zweite betonfreie Räume 8 und 18 bilden jeweils ein im wesentlichen lineares Rohrleitungssegment 14. Die Übergänge zwischen den ersten und zweiten betonfreien Räumen 8, 18 sind nicht abrupt, sondern verlaufen über sich kontinuierlich verjüngende bzw. verbreiternde Wandelemente 34 bzw. 36. Die Rohrleitungssegmente 14 können mit Be- bzw. Entlüftungskanälen 38, 40 in Verbindung stehen.

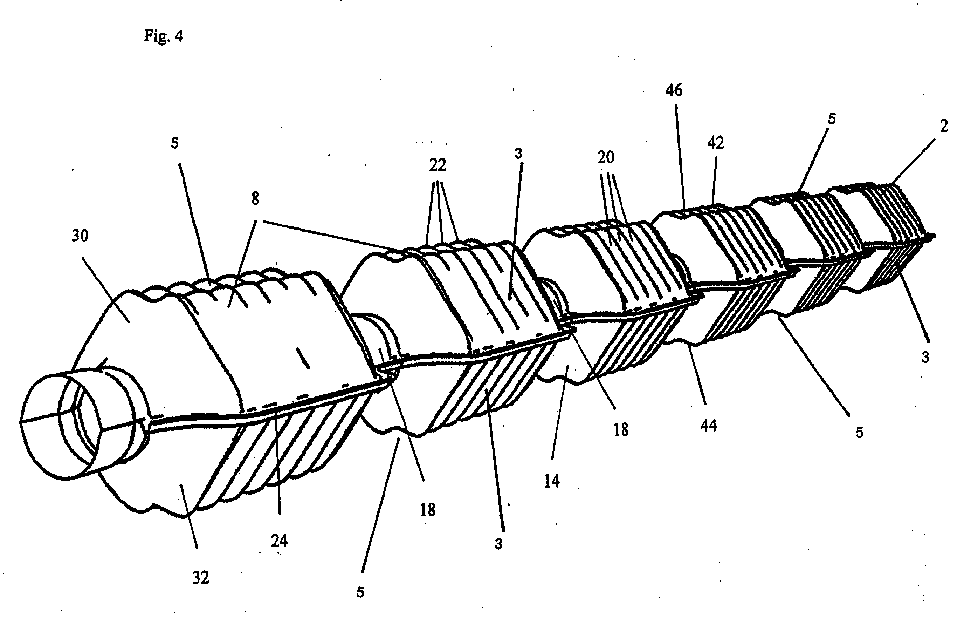

Fig. 4 zeigt einen Detailausschnitt aus einem Rohrleitungssystem, welches das Leitungssystem 2' bildet. Rohrabschnitte mit im wesentlichen an ein Sechseck angelehntem Querschnitt formen die ersten betonfreien Räume 8'. Fig. 4 ist somit ein Rohrsegment 14' zu entnehmen, das sich aus Rohrabschnitten für erste betonfreie Räume 8' und aus dazwischenliegenden zweiten betonfreien Räumen 18 zusammensetzt. Deutlich zu erkennen sind die aufeinander folgenden, parallel angeordneten Einbuchtungen 20 und Auswölbungen 22 auf der Außenseite des Rohrabschnitts 8', die quer zur Rohrlängsrichtung verlaufen. Über den Flansch 24 sind die obere Hälfte 30 und die untere Hälfte 32 des Rohrsegments 14 miteinander verbunden. Die oberen und unteren Wandungsflächen 42, 44 der betonfreien Räume 8' des erfindungsgemäßen Rohrleitungssystems 2' verfügen jeweils in ihrer Längsrichtung über eine nach innen gerichtete Einbuchtung 46, die jeweils zu Wandungsflächen mit im wesentlichen konvexen bzw. konkaven Erscheinungsbild führt. Mit dieser Ausgestaltung der sich gegenüberliegenden Wandungsflächen 42, 44 werden Auflage- bzw. Standflächen geschaffen, die ein sicheres Einarbeiten und Justieren des Rohrleitungssystems 2' in eine erfindungsgemäße Betondecke 1' ermöglichen. Beispielsweise kann bei der dargestellten Ausführungsform das Rohrleitungssystem 2' auf eine Schicht noch nicht erhärteten Betons aufgelegt werden, ohne daß die die ersten betonfreien Räume 8' bildenden Rohrabschnitte kippen oder sich verdrehen.

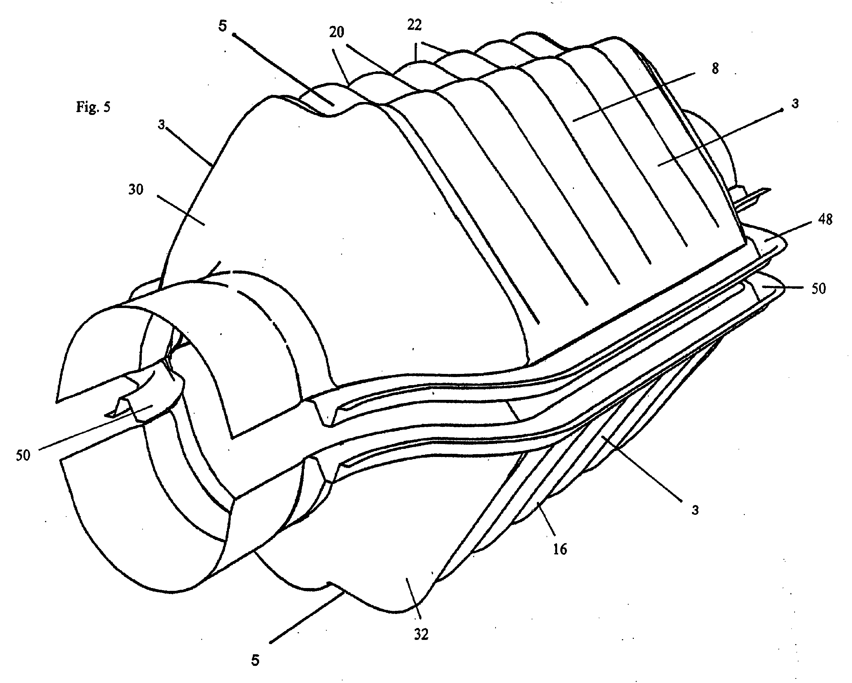

Fig. 5 zeigt die vorgenannten oberen und unteren Rohrhälften 30 und 32 eines Rohrelements 16 vor dem Zusammenfügen. Wie zu ersehen, umlaufen die Auswölbungen und Einbuchtungen 20, 22 den Umfang des ersten Rohrabschnitts 8' vollständig. Überdies können die Einbuchtungen 20 auf der Außenseite mit den Auswölbungen auf der Innenseite (nicht abgebildet) und die Auswölbungen 22 auf der Außenseite mit den Einbuchtungen auf der Innenseite (nicht abgebildet) korrespondieren. Die Ober- und Unterhälften 30, 32 sind jeweils an ihren Rändern mit einer oberen bzw. unteren Falz 48, 50 ausgestattet. Die oberen und unteren Falze bzw. Flansche 48, 50 sind vorzugsweise rinnenförmig ausgebildet, wodurch ein einfaches und sicheres Justieren und Ineinanderlegen bzw. Montieren des Rohrleitungssystems 2 erheblich erleichtert wird. Einmal aufeinandergelegt, ist ein Verrutschen der oberen und unteren Hälften 30, 32, insbesondere wenn die obere Hälfte 30 mit Betonmaterial beschwert wird, nicht mehr möglich. Die Falze können selbstverständlich auch weitere geeignete geometrische Querschnittsformen annehmen, z.B. eine Dreiecks- oder Rechtecksform.

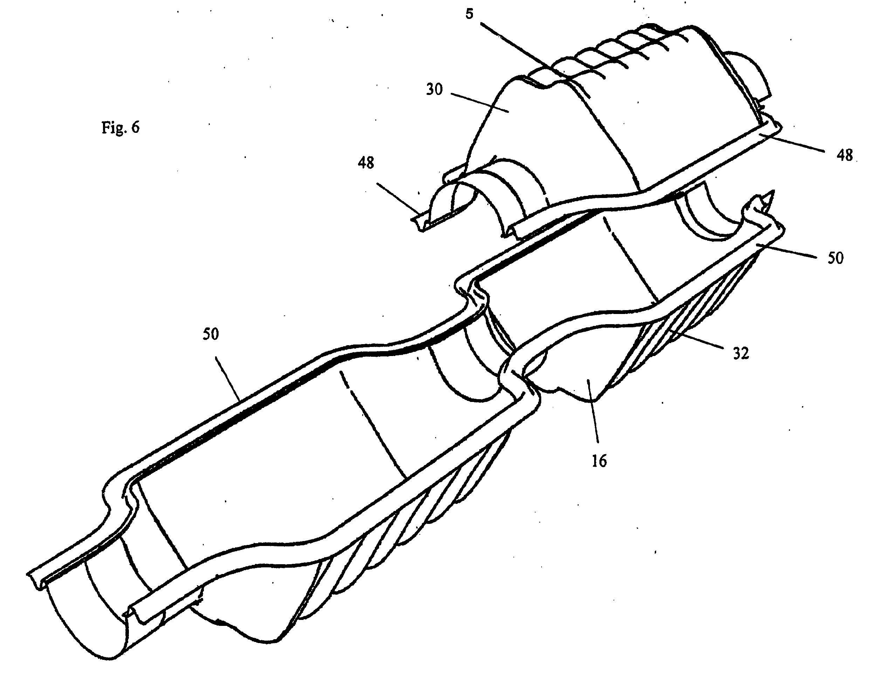

Fig. 6 zeigt eine weitere Ausgestaltung für eine aus Schalenhälften zusammengebaute Rohrleitung 2'. Vorliegend sind zwei untere Hälften 32' eines Rohrelements 16 einstückig miteinander verbunden und können mit jeweils einer oberen Hälfte des Rohrelements 30 versehen werden. Es hat sich als vorteilhaft herausgestellt, sich gegenüberliegende Falze von unterer bzw. oberer Rohrhälfte 30, 32 gegengleich auszugestalten. Sind beispielsweise die Falze 48, 50 der einen Seite des Rohrelements 16 nach unten geöffnet, so sind die gegenüberliegenden rinnenförmigen Falze nach oben hin geöffnet.

Besonders gut gelingt eine Justierung von oberen und unteren Hälften 30, 32, wenn mindestens eine obere oder untere Falz mit einer Öffnung versehen ist (nicht abgebildet), durch die von der gegenüberliegenden Falzseite eine Niete oder ein umklappbarer Kragen eingeführt werden kann.

Schließlich ist Fig. 5 und 6 zu entnehmen, wie das erfindungsgemäße Rohrleitungssystem 2' in einfacher Weise aus oberer und unterer Hälfte 30, 32 des Rohrelements 16 mit weiteren oberen und unteren Hälften 32 und 30 (nicht abgebildet) durch Auf- und Aneinanderfügen zu einem kompletten Rohrsegment 14 zusammengebaut werden kann.

An das Rohrleitungssystem 2' sowie an seine einzelnen Bestandteile können desweiteren beliebige Zusatzelemente zur Schubbewehrung einer Betonplatte, insbesondere einer Stahlbetonplatte angebracht sein oder aus dem entsprechenden Rohrleitungsmaterial direkt angeformt werden. Gleichfalls können desweiteren zur Auftriebssicherung entsprechende Halterungen an dem Rohrleitungssystem 2' vorliegen oder im nachhinhein angebracht werden.

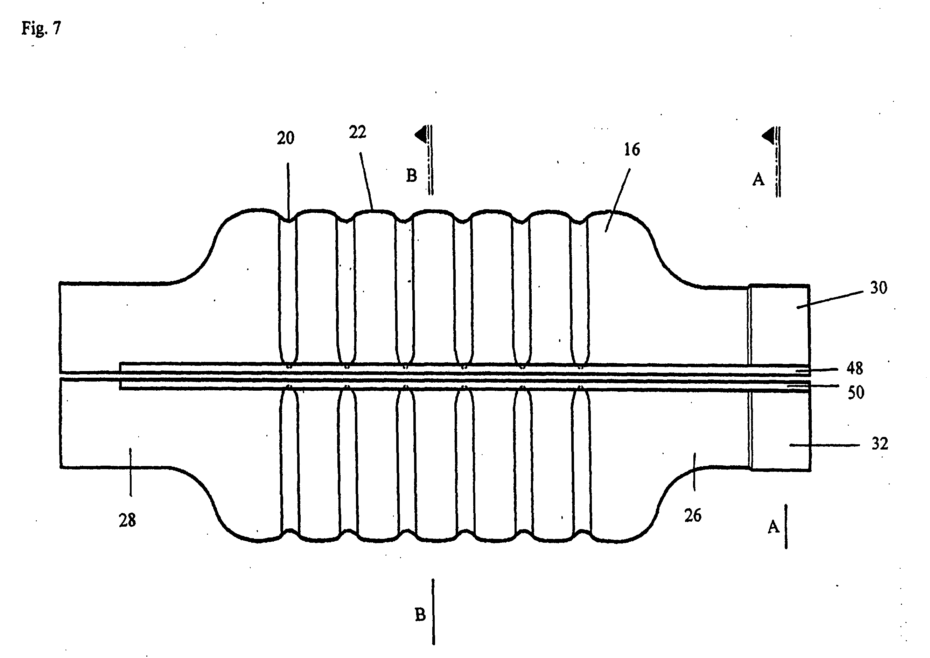

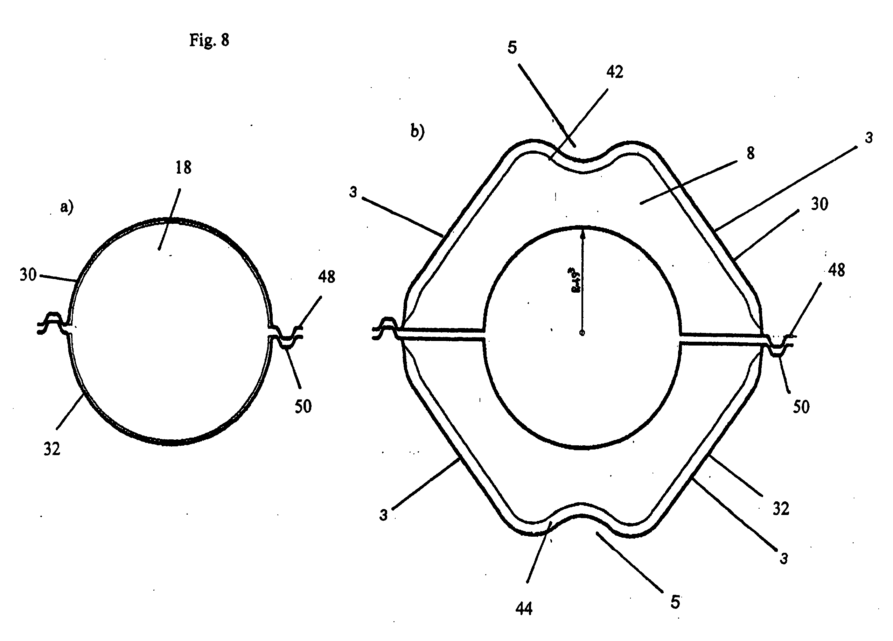

Fig. 7 zeigt eine Seitenansicht eines Abschnitts einer erfindungsgemäßen Rohrleitung 2' gemäß Fig. 5. Der den ersten betonfreien Raum 8' bildende Rohrabschnitt verfügt gegenüber den Rohreingangs- bzw. Rohrausgangsteilstücken 26 und 28 über einen größeren Querschnitt bzw. Durchmesser. Das Rohrausgangsteilstück 28 ist derart gestaltet, daß es das Rohreingangsteilstück 26 eines weiteren Rohrelements 16 unter Ausbildung eines zweiten betonfreien Raumes 18 bündig aufnehmen kann. Wie der Abbildung 7 weiter zu entnehmen ist, sind die Übergänge zwischen den Rohrabschnitten, die die ersten und zweiten betonfreien Abschnitte bilden, nicht abrupt, sondern fließend ausgestaltet. Anhand der in den Figuren 8a und 8b wiedergegebenen Querschnittsansichten an den Positionen A-A bzw. B-B wird besonders deutlich, wie die oberen und unteren Falze 48, 50 schlüssig unter Ausbildung eines Rohrleitungssystems ineinandergreifen. Dabei ist das einen zweiten betonfreien Raum 18 bildende Rohrsegment im Querschnitt-kreisförmig ausgestaltet. Der einen ersten betonfreien Raum 8' bildende Rohrabschnitt verfügt dagegen über eine im wesentlichen sechseckige Querschnittsform mit einander gegenüberliegenden, im wesentlichen parallelen Wandungsflächen 42, 44, die eine konkave bzw. konvexe Wölbung in Richtung auf das Innere des Rohres aufweisen.

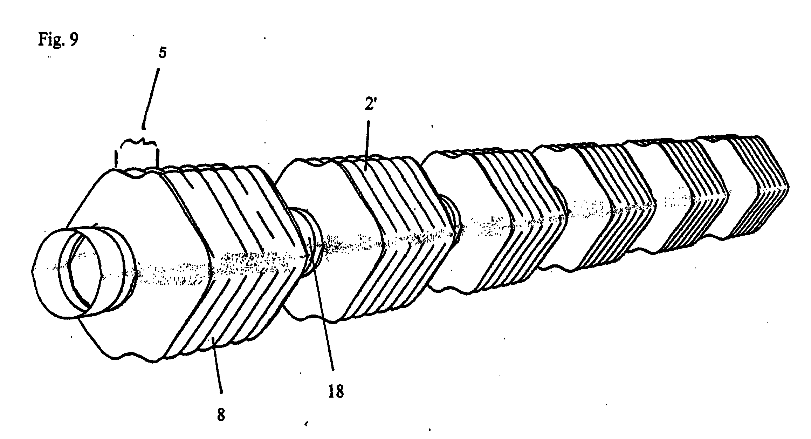

Fig. 9 zeigt eine alternative erfindungsgemäße Rohrleitung 2" in perspektivischer Darstellung. Die die ersten betonfreien Räume 8" bildenden Rohrabschnitte sind einstückig ausgestaltet und verfügen über ebenfalls einstückig angebundene Rohreingangs- und Rohrausgangsteilstücke 26, 28. Diese Rohreingangs- und Rohrausgangsteilstücke 26, 28 können unter Ausbildung zweiter betonfreier Räume 18' ineinandergesteckt werden. Diese Ausführungsform bietet sich insbesondere dann an, wenn das Rohrleitungssystem 2" aus Kunststoff gefertigt ist, da sich diese Rohrelemente 16 ohne weiteres in einem Arbeitsgang mittels Blasformen bilden lassen.

Mit den erfindungsgemäßen Betondecken, enthaltend ein durchströmbares Leitungssystem sowie insbesondere das erfindungsgemäße Rohrleitungssystem, gelingt es zudem erstmalig, auf einfache und kostengünstige Weise Geschoß- bzw. Bodendecken aus Beton bzw. Stahlbeton zur Verfügung zu stellen, mit deren Hilfe sich Gebäude effizient und energiesparend temperieren lassen. Beispielsweise eignen sich die erfindungsgemäßen Betondecken für die Verwendung beim Bau von Energiesparhäusern, z.B. von so genannten Passivhäusern, und tragen damit maßgeblich dazu bei, Gebäude konzipieren zu können, die vollständig oder nahezu vollständig auf herkömmliche Heizsysteme verzichten können.

Mit der erfindungsgemäßen Betondecke kann eine erhebliche Gewichtsreduzierung bewirkt werden, ohne daß Einbußen bei der Steifigkeit in Kauf genommen werden müssen. So kann das Gewicht herkömmlicher Betondecken ohne weiteres um mehr als etwa 10 %, bevorzugt mehr als 15 % und besonders bevorzugt mehr als 20 Gew.-% gesenkt werden, wobei auch Werte von 25 % und darüber erreicht werden. Aufgrund dieser Gewichtsreduzierung können z.B. Fundamente von Gebäuden geringer ausgelegt werden, was insbesondere bei mehrgeschossigen Gebäuden insgesamt zu einer erheblichen Kostenersparnis führt.

Des weiteren wurde überraschend gefunden, daß die erfindungsgemäßen Betondecken über eine Biegesteifigkeit verfügen, die nicht oder, wenn überhaupt, nur geringfügig von der herkömmlicher Betondecken abweicht, und zwar in Längs- wie auch in Querrichtung. Gleiches trifft auf die Schubsteifigkeit zu. Die Abweichungen gegenüber herkömmlichen Betondecken liegen im Bereich bis etwa 10 %, vorzugsweise im Bereich bis etwa 5 %. Damit verfügt die erfindungsgemäße Betondecke, wie Betondecken, die keine betonfreien Räume aufweisen, über ein isotropes oder nahezu isotropes mechanisches Verhalten, insbesondere im Hinblick auf die Biegesteifigkeit wie auch im Hinblick auf die Schubsteifigkeit und kann demgemäß auch mit gängigen, kommerziell erhältlichen Statikrechenprogrammen bearbeitet werden.

### Bezugszeichenliste

- 1, 1': Betondecke
- 2, 2', 2": Leitungssystem (Rohrleitungssystem)
- 3: Wandungsfläche
- 4: obere Bewehrung
- 5: Wandungsfläche
- 6: untere Bewehrung
- 7: untere Kante des Rohrabschnittes 8, Wandungsfläche (schmal)
- 8, 8', 8": erster betonfreier Raum
- 9: obere Kante des Rohrabschnitts 8, Wandungsfläche (schmal)
- 10: Rohreinlaß
- 12: Rohrauslaß
- 14, 14': Rohrsegment
- 16: Rohrelement
- 18, 18': Zweiter betonfreier Raum, gerade
- 19: Zweiter betonfreier Raum, gekrümmt
- 20, 20': Einbuchtung außen
- 22, 22': Auswölbung außen
- 24: Flansch
- 26: Rohreingangsteilstück
- 28: Rohrausgangsteilstück
- 30, 30': obere Hälfte des Rohrelements
- 32, 32': untere Hälfte des Rohrelements
- 34: sich verjüngendes Wandelement
- 36: sich verjüngendes Wandelement
- 38: Belüftungskanal
- 40: Entlüftungskanal
- 42: obere Wandungsfläche
- 44: untere Wandungsfläche
- 46: Einbuchtung
- 48: obere Falz
- 50: untere Falz

## Patentansprüche

1. Betondecke (1, 1'), insbesondere temperierbare Betondecke, umfassend eine Ober- und eine Unterseite, enthaltend erste betonfreie Räume (8, 8', 8"), insbesondere Hohlräume und zweite betonfreie Räume (18, 18', 19), insbesondere zweite Hohlräume, wobei in der Betondecke (1, 1') die ersten betonfreien Räume (8, 8', 8"), insbesondere zwei, drei, vier oder eine Vielzahl an ersten betonfreien Räumen, und die zweiten betonfreien Räume (18, 18', 19) wenigstens abschnittsweise alternierend aufeinanderfolgend miteinander verbindbar oder verbunden, angeordnet sind, wobei besagte erste betonfreie Räume (8, 8', 8") einen größeren maximalen Durchmesser im Querschnitt haben als besagte zweite betonfreie Räume (18, 18', 19), **dadurch gekennzeichnet, dass** besagte erste betonfreie Räume wenigstens entlang eines Abschnitts mindestens eine, insbesondere zwei, drei, vier oder mehr, im wesentlichen ebene, konkave, konvexe oder wellen- oder zakkenförmige erste Wandungsfläche (3) aufweisen, die nicht im wesentlichen parallel oder senkrecht zur Unter- und/oder Oberseite der Betondecke (1, 1') ausgerichtet ist.

2. Betondecke nach Anspruch 1, **dadurch gekennzeichnet, daß**
die ersten und/oder die zweiten betonfreien Räume (8, 8', 8"; 18, 18', 19) wenigstens entlang eines Abschnitts, insbesondere mit einem im wesentlichen polygonalen Querschnitt, mindestens zwei, insbesondere drei, vier, fünf oder mehr, erste Wandungsflächen (3) umfassen, die nicht im wesentlichen parallel oder senkrecht zur Unter- und/oder Oberseite der Betondecke (1, 1') ausgerichtet sind.

3. Betondecke nach einem der vorangehenden Ansprüche, **dadurch gekennzeichnet, daß** die ersten und/oder zweiten, insbesondere die ersten, betonfreien Räume (8, 8', 8"; 18, 18', 19) zumindest entlang eines Abschnitts über eine im wesentlichen ebene, wellenförmige, konvexe und/oder konkave zweite Wandungsfläche (5) und/oder eine, insbesondere abgeschnittene, abgerundete und/oder profilierte, Kante (9) verfügen, die im wesentlichen parallel zur Oberseite der Betondecke (1, 1') ausgerichtet ist und/oder insbesondere im Durchschnitt einen geringeren Abstand zur Oberseite aufweist als die ersten Wandungsflächen (3) von ersten und/oder zweiten betonfreien Räumen und/oder zumindest entlang eines Abschnitts über eine im wesentlichen ebene, wellenförmige, konvexe und/oder konkave zweite Wandungsfläche (5) und/oder eine, insbesondere abgeschnittene, abgerundete und/oder profilierte, Kante (7) verfügen, die im wesentlichen parallel zur Unterseite der Betondecke (1, 1') ausgerichtet ist und/oder insbesondere im Durchschnitt einen geringeren Abstand zur Unterseite aufweist als die ersten Wandungsflächen (3) von ersten und/oder zweiten betonfreien Räumen.

4. Betondecke nach einem der vorangehenden Ansprüche, **dadurch gekennzeichnet, daß** mindestens eine Kante des Abschnitts des ersten und/oder zweiten betonfreien Raums mit im wesentlichen polygonalem Querschnitt derart ausgerichtet ist, daß diese überwiegend, insbesondere ausnahmslos, einen geringeren Abstand zur Unterseite der Betondecke (1, 1') aufweist als die sich an diese Kante anschließenden ersten Wandungsflächen (3) und/oder daß eine weitere Kante dieses Abschnitts überwiegend, insbesondere ausnahmslos, einen geringeren Abstand zur Oberseite der Betondecke (1, 1') aufweist als die sich an diese Kante anschließenden ersten Wandungsflächen (3).

5. Betondecke nach einem der vorangehenden Ansprüche, **dadurch gekennzeichnet, daß** die betonfreien Räume (8, 8', 8"; 18, 18', 19) ein Kunststoffmaterial, insbesondere einen geschäumten Kunststoff, enthalten.

6. Betondecke nach einem der vorangehenden Ansprüche, **dadurch gekennzeichnet, daß** erste betonfreie Räume (8, 8', 8") und zweite betonfreie Räume (18, 18', 19) alternierend aufeinanderfolgend vorliegen.

7. Betondecke nach einem der vorangehenden Ansprüche, **dadurch gekennzeichnet, daß** die, insbesondere alternierend mit zweiten betonfreien Räumen angeordneten, ersten betonfreien Räume in Form und/oder Größe im wesentlichen übereinstimmen und/oder daß mindestens zwei aufeinanderfolgende, durch einen zweiten betonfreien Raum miteinander verbundene erste betonfreie Räume über eine im wesentlichen einheitliche Querschnittsform, insbesondere entlang der Verbindungsachse, verfügen, wobei insbesondere diese ersten betonfreien Räume in Bezug auf ihre Querschnittsform im wesentlich gleichförmig ausgerichtet sind.

8. Betondecke nach Anspruch 7, **dadurch gekennzeichnet, daß**
die, insbesondere alternierend, aufeinanderfolgenden ersten und zweiten betonfreien Räume (8, 8', 8"; 18, 18', 19) miteinander unter Ausbildung eines Leitungssystems (2, 2', 2"), verbunden bzw. verbindbar sind.

9. Betondecke nach Anspruch 8, **dadurch gekennzeichnet, daß**
die Verbindung von aufeinanderfolgenden ersten und zweiten betonfreien Räumen (8, 8', 8"; 18, 18', 19) über sich verjüngende bzw. sich verbreiternde Wandelemente (34, 36), insbesondere in Form von Kegelstümpfen, erfolgt.

10. Betondecke nach einem der vorangehenden Ansprüche, **dadurch gekennzeichnet, daß**
die betonfreien Räume (8, 8', 8"; 18, 18', 19) ein Gas und/oder ein Fluid enthalten und insbesondere durchströmbar sind.

11. Betondecke nach einem der Ansprüche 8 bis 10, **dadurch gekennzeichnet, daß**
das Leitungssystem (2, 2', 2") mindestens eine Einlaß- (10) und mindestens eine Auslaßöffnung (12) umfaßt.

12. Betondecke nach einem der vorangehenden Ansprüche, **dadurch gekennzeichnet, daß** zumindest eine Wandungsfläche (3) der ersten und/oder zweiten betonfreien Räume (8, 8', 8"; 18, 18', 19) wenigstens abschnittsweise innen- und/oder außenseitig mindestens zwei aufeinanderfolgende, durch eine Auswölbung (22, 22') getrennte Einbuchtungen (20, 20') aufweist, welche sich im wesentlichen über den gesamten Umfang des Querschnitts, vorzugsweise in im wesentlichen paralleler Ausrichtung, erstrecken.

13. Betondecke nach einem der vorangehenden Ansprüche, **dadurch gekennzeichnet, daß** die Querschnitte der ersten und/oder zweiten betonfreien Räume (8, 8', 8"; 18, 18', 19) zumindest abschnittsweise im wesentlichen die Form eines Drei-, Vier-, Fünf-, Sechs-, Sieben- oder Achtecks, insbesondere die Form eines Quadrats, Trapezes oder Rechtecks, insbesondere mit abgerundeten oder abgeflachten Kanten, ausbilden.

14. Betondecke nach einem der vorangehenden Ansprüche, **dadurch gekennzeichnet, daß** die Querschnitte der zweiten betonfreien Räume (18, 18', 19) im wesentlichen kreis- oder ellipsenförmig ausgebildet sind.

15. Betondecke nach einem der vorangehenden Ansprüche, **dadurch gekennzeichnet, daß** alternierend aufeinanderfolgende betonfreie erste und zweite Räume (8, 8', 8"; 18, 18', 19) im wesentlichen entlang einer geraden oder gekrümmten Linie angeordnet sind und insbesondere ein Segment (14), , eines Leitungssystems (2, 2', 2"), enthaltend mindestens zwei erste und zweite betonfreie Räume, bilden.

16. Betondecke nach Anspruch 15, **dadurch gekennzeichnet, daß**
mindestens zwei Leitungssegmente (14) im wesentlichen parallel zueinander verlaufen, wobei diese Leitungssegmente (14) insbesondere über, insbesondere gekrümmte, zweite betonfreie Räume (19) verbindbar bzw. verbunden sind.

17. Betondecke nach einem der vorangehenden Ansprüche, **dadurch gekennzeichnet, daß** unter der Oberfläche der Oberseite und/oder unter der Oberfläche der Unterseite der Betondecke (1, 1'), insbesondere unter- und/oder oberhalb der zweiten betonfreien Räume (8, 8', 8"; 18, 18', 19), eine Bewehrung (4, 6) in derselben vorliegt.

18. Betondecke nach einem der vorangehenden Ansprüche, **dadurch gekennzeichnet, daß** die Wandungsflächen (3) der ersten und/oder zweiten betonfreien Räume (8, 8', 8"; 18, 18', 19) abschnittsweise oder insbesondere durchgängig aus Kunststoff und/oder Metall gebildet sind.

19. Betondecke nach Anspruch 18, **dadurch gekennzeichnet, daß**
die Wandungsflächen aus Metall und/oder Kunststoff eine Rohrleitung bzw. ein Rohrleitungssystem (2, 2', 2") bilden.

20. Betondecke nach Anspruch 19, **dadurch gekennzeichnet, daß**
die Innenwand und/oder die Außenwand der Rohrleitung (2, 2', 2"), insbesondere im Bereich der ersten betonfreien Räume (8, 8', 8"), jeweils über mindestens zwei aufeinanderfolgende, durch eine Einbuchtung (20, 20') getrennte Auswölbungen (22, 22') verfügt, die sich im wesentlichen über den gesamten Umfang des Rohrquerschnitts, vorzugsweise in im wesentlichen paralleler Ausrichtung, erstrecken.

21. Betondecke nach Anspruch 20, **dadurch gekennzeichnet, daß**
die Rohrleitung (2, 2', 2") aus einem Unterteil (32, 32') und einem Oberteil (30, 30') zusammensetzbar bzw. zusammengesetzt ist, die insbesondere über zumindest in Teilen aufeinanderliegende, insbesondere ineinandergreifende, Flansche (24) und/oder Falze (48, 50) verbindbar bzw. verbunden sind.

22. Betondecke nach einem der vorangehenden Ansprüche, **dadurch gekennzeichnet, daß** in der Betondecke, insbesondere mindestens drei, vier oder eine Vielzahl an, erste(n) betonfreie(n) Räume(n) und zweite(n) betonfreie(n) Räume(n) enthalten sind, die miteinander, insbesondere unter Ausbildung eines vorzugsweise mindestens eine Einlaß- und mindestens eine Auslaßöffnung aufweisenden Leitungssystems, verbindbar oder verbunden sind und alternierend aufeinanderfolgend vorliegen, wobei besagte erste betonfreie Räume einen kleineren und/oder größeren maximalen Durchmesser im Querschnitt haben als besagte zweite betonfreie Räume und wobei besagte erste und zweite betonfreie Räume im wesentlichen eine zylindrische Form aufweisen und über kegelstumpfförmige Wandelemente miteinander verbindbar bzw. verbunden sind.

23. Betondecke nach einem der vorangehenden Ansprüche, **dadurch gekennzeichnet, daß** die Betondecke (1, 1') eine Geschoßdecke, insbesondere eine Flachdecke oder eine Filigrandecke, oder eine Bodenplatte darstellt.

24. Betondecke nach einem der vorangehenden Ansprüche, **gekennzeichnet durch**
ein im wesentlichen isotropes mechanisches Verhalten, insbesondere **durch** eine im wesentlichen isotrope Biegesteifigkeit und/oder **durch** eine im wesentlichen isotrope Schubsteifigkeit.

25. Betondecke nach einem der vorangehenden Ansprüche, **dadurch gekennzeichnet, daß** mindestens drei, insbesondere eine Vielzahl, an ersten und zweiten betonfreien Räumen (8, 8'; 8"; 18, 18', 19) aufeinanderfolgend alternierend angeordnet sind unter Ausbildung einer Leitung oder einer Leitungseinheit.

26. Betondecke nach einem der vorangehenden Ansprüche, **dadurch gekennzeichnet, daß** eine, insbesondere abgeflachte oder nach innen gewölbte, Schmalseite der ersten und/oder zweiten betonfreien Räume (8, 8', 8"; 18, 18', 19) der Ober- und/oder Unterseite der Betondecke zugewandt ist bzw. sind.

27. Verwendung der Betondecken gemäß den Ansprüchen 1 bis 26 zum Temperieren von Gebäuden.

28. Verwendung der Betondecke gemäß einem der Ansprüche 1 bis 26 als Geschoßdecke, insbesondere Flachdecke oder Filigrandecke, oder als Bodenplatte.

29. Rohrleitung, insbesondere mit mindestens einem Rohreinlaß (10) und mindestens einem Rohrauslaß (12), für die Verwendung in einer Betondecke nach einem der Ansprüche 1-28, **gekennzeichnet durch** mindestens zwei, insbesondere mindestens 10, alternierend aufeinanderfolgende erste und zweite Rohrabschnitte, wobei besagte Rohrleitung (2, 2', 2") wenigstens entlang eines ersten Rohrabschnitts einen Rohrquerschnitt mit polygonaler oder nahezu polygonaler Querschnittsfläche umfaßt, wobei der Durchmesser des Querschnitts der zweiten Rohrabschnitte der Rohrleitung (2, 2', 2") zwischen aufeinanderfolgenden ersten Rohrabschnitten kleiner ist als der größtmögliche Querschnittsdurchmesser dieser ersten Abschnitte, wobei wenigstens eine Wandungsfläche (3, 5, 7, 42, 44) mindestens eines, insbesondere einer Vielzahl an, ersten und/oder zweiten Rohrabschnitts (8, 8', 8"; 18, 18', 19) zumindest abschnittsweise in Längsrichtung der Rohrleitung mindestens eine Einbuchtung (46) in Richtung auf das Innere der Rohrleitung (2, 2', 2") aufweist oder wenigstens ein Kantenabschnitt mindestens eines, insbesondere einer Vielzahl an, ersten und/oder zweiten Rohrabschnitts (8, 8', 8"; 18, 18', 19) abgerundet, abgeflacht und/oder profiliert vorliegt, und wobei wenigstens zwei Wandungsflächen (3, 42, 46) oder, insbesondere abgeflachte, abgerundete oder profilierte, Kantenabschnitte eines ersten und/oder zweiten Rohrabschnitts (8, 8', 8"; 18, 18`, 19) im wesentlichen parallel zueinander ausgerichtet sind, wobei mindestens eine dieser Wandungsflächen oder Kantenabschnitte wenigstens abschnittsweise in Längsrichtung mindestens eine Einbuchtung (46) in Richtung auf das Innere der Rohrleitung (2, 2', 2") aufweist.

30. Rohrleitung nach Anspruch 29, **dadurch gekennzeichnet, daß**
die Rohrleitung (2, 2', 2") zwischen den ersten Rohrabschnitten mit polygonaler oder nahezu polygonaler Querschnittsfläche zweite Rohrabschnitte mit einem kreis- oder ellipsenförmigen Querschnitt aufweist.

31. Rohrleitung nach einem der Ansprüche 29 oder 30, **dadurch gekennzeichnet, daß**
die, insbesondere alternierend mit zweiten Rohrabschnitten angeordneten, ersten Rohrabschnitte in Form und/oder Größe im wesentlichen übereinstimmen und/oder daß mindestens zwei aufeinanderfolgende, durch einen zweiten Rohrabschnitt miteinander verbundene erste Rohrabschnitte über eine im wesentlichen einheitliche polygonale Querschnittsform, insbesondere entlang der Verbindungsachse, verfügen, wobei insbesondere diese ersten Rohrabschnitte in Bezug auf ihre Querschnittsform im wesentlich gleichförmig ausrichtbar bzw. ausgerichtet sind.

32. Rohrleitung nach einem der Ansprüche 29 bis 31, **dadurch gekennzeichnet, daß**
die ersten und/oder zweiten Rohrabschnitte innenseitig und/oder außenseitig mindestens zwei aufeinanderfolgende, durch eine Auswölbung (22, 22') getrennte Einbuchtungen (20, 20') aufweisen, welche sich im wesentlichen über den gesamten Umfang des Rohrquerschnitts, vorzugsweise in im wesentlichen paralleler Ausrichtung und/oder quer zur Längsachse der Rohrleitung, erstrecken.

33. Rohrleitung nach einem der Ansprüche 29 bis 32, **dadurch gekennzeichnet, daß** diese im wesentlichen aus Kunststoff und/oder Metall besteht.

## Claims

1. Concrete floor (1, 1'), in particular a temperature-controlled concrete floor, comprising an upper side and an underside, containing first concrete-free spaces (8, 8', 8"), in particular hollow spaces, and second concrete-free spaces (18, 18', 19), in particular second hollow spaces, the first concrete-free spaces (8, 8', 8"), in particular two, three, four or a plurality of first concrete-free spaces, and the second concrete-free spaces (18, 18' , 19) being arranged in the concrete floor (1, 1') in a layout in which they are either connected to each other or can be connected to each other in, at least in sections, an alternating sequence, said first concrete-free spaces (8, 8', 8") having a larger maximum diameter in cross-section than said second concrete-free spaces (18, 18', 19), **characterized in that** said first concrete-free spaces have, at least along one section, at least one, in particular two, three, four or more, substantially planar, concave, convex or wavy or serrated first wall surface(s) (3) which is/are not aligned substantially parallel or perpendicular to the underside and/or upper side of the concrete floor (1, 1').

2. Concrete floor according to Claim 1, **characterized in that** the first and/or the second concrete-free spaces (8, 8', 8"; 18, 18', 19) comprise, at least along one section having in particular a substantially polygonal cross-section, at least two, in particular three, four, five or more, first wall surfaces (3) which are not aligned substantially parallel or perpendicular to the underside and/or upper side of the concrete floor (1, 1').

3. Concrete floor according to one of the preceding claims, **characterized in that** the first and/or second, in particular the first, concrete-free spaces (8, 8', 8"; 18, 18', 19) have, at least along one section, a substantially planar, wavy, convex and/or concave second wall surface (5) and/or an edge (9), which is in particular cut off, rounded and/or profiled, said edge (9) being aligned substantially parallel to the upper side of the concrete floor (1, 1') and/or in particular in cross-section having a smaller distance to the upper side than the first wall surfaces (3) of first and/or second concrete-free spaces and/or have, at least along one section, a substantially planar, wavy, convex and/or concave second wall surface (5) and/or an edge (7), which is in particular cut off, rounded and/or profiled, said edge (7) being aligned substantially parallel to the underside of the concrete floor (1, 1') and/or in particular in cross-section having a smaller distance to the underside than the first wall surfaces (3) of first and/or second concrete-free spaces.

4. Concrete floor according to one of the preceding claims, **characterized in that** at least one edge of the section of the first and/or second concrete-free space having a substantially polygonal cross-section is formed in such a way that said edge has predominantly, in particular without exception, a smaller distance to the underside of the concrete floor (1, 1') than the first wall surfaces (3) connected to this edge and/or that a further edge of this section has predominantly, in particular without exception, a smaller distance to the upper side of the concrete floor (1, 1') than the first wall surfaces (3) connected to this edge.

5. Concrete floor according to one of the preceding claims, **characterized in that** the concrete-free spaces (8, 8', 8"; 18, 18', 19) contain a plastic material, in particular a foamed plastic.

6. Concrete floor according to one of the preceding claims, **characterized in that** first concrete-free spaces (8, 8', 8") and second concrete-free spaces (18, 18', 19) are present in an alternating sequence.

7. Concrete floor according to one of the preceding claims, **characterized in that** the first concrete-free spaces, which are arranged in particular in an alternating sequence with second concrete-free spaces, substantially coincide in form and/or size, and/or **in that** at least two first concrete-free spaces in sequence, which are connected to each other by means of a second concrete-free space, have a substantially uniform cross-sectional form, in particular along the connecting axis, in particular these first concrete-free spaces being formed substantially uniformly in relation to their cross-sectional form.

8. Concrete floor according to Claim 7, **characterized in that** the, in particular alternating, sequential first and second concrete-free spaces (8, 8', 8"; 18, 18', 19) are connected or connectable to each other under formation of a pipe system (2, 2', 2").

9. Concrete floor according to Claim 8, **characterized in that** the connection between sequential first and second concrete-free spaces (8, 8', 8"; 18, 18', 19) is realized by way of narrowing or widening wall elements (34, 36), in particular in the form of truncated cones.

10. Concrete floor according to one of the preceding claims, **characterized in that** the concrete-free spaces (8, 8', 8"; 18, 18', 19) contain a gas and/or fluid and in particular are formed in such a way as to enable a flow to take place through them.

11. Concrete floor according to one of Claims 8 to 10, **characterized in that** the pipe system (2, 2', 2") comprises at least one inlet opening (10) and at least one outlet opening (12).

12. Concrete floor according to one of the preceding claims, **characterized in that** at least one wall surface (3) of the first and/or second concrete-free spaces (8, 8', 8"; 18, 18', 19) has, at least in sections, on the inside and/or outside at least two indentations (20, 20') in sequence which are separated by one bulge (22, 22') and which extend substantially around the entire circumference of the cross-section, preferably having a substantially parallel alignment.

13. Concrete floor according to one of the preceding claims, **characterized in that** the cross-sections of the first and/or second concrete-free spaces (8, 8', 8"; 18, 18', 19) at least in sections substantially take the form of a triangle, tetragon, pentagon, hexagon, heptagon or octagon, in particular the form of a square, trapezoid or rectangle, in particular with rounded or flattened edges.

14. Concrete floor according to one of the preceding claims, **characterized in that** the cross-sections of the second concrete-free spaces (18, 18' 19) substantially take a circular or ellipsoidal form.

15. Concrete floor according to one of the preceding claims, **characterized in that** first and second concrete-free spaces (8, 8', 8"; 18, 18', 19) are arranged in an alternating sequence substantially along a straight or curved line and form in particular one segment (14) of a pipe system (2, 2', 2") containing at least two first and two second concrete-free spaces.

16. Concrete floor according to Claim 15, **characterized in that** at least two pipe segments (14) run substantially in parallel to each other, these pipe segments (14) being connectable or connected in particular by means of in particular curved second concrete-free spaces (19).

17. Concrete floor according to one of the preceding claims, **characterized in that** underneath the surface of the upper side and/or underneath the surface of the underside of the concrete floor (1, 1'), in particular underneath and/or above the second concrete-free spaces (8, 8', 8"; 18, 18', 19), a reinforcement (4, 6) is present therein.

18. Concrete floor according to one of the preceding claims, **characterized in that** the wall surfaces (3) of the first and/or second concrete-free spaces (8, 8', 8"; 18, 18', 19) are formed in sections or in particular throughout of plastic and/or metal.

19. Concrete floor according to Claim 18, **characterized in that** the wall surfaces made of metal and/or plastic form a pipe or a pipe system (2, 2', 2").

20. Concrete floor according to Claim 19, **characterized in that** the inner wall and/or the outer wall of the pipe (2, 2', 2"), in particular in the area of the first concrete-free spaces (8, 8', 8"), each have at least two bulges (22, 22') in sequence which are separated by one indentation (20, 20') and which extend substantially around the entire circumference of the pipe cross-section, preferably having a substantially parallel alignment.

21. Concrete floor according to Claim 20, **characterized in that** the pipe (2, 2', 2") is or can be assembled from a lower part (32, 32') and an upper part (30, 30'), which are connectable or connected particularly by means of at least partially overlaid, in particular mutually engaging, flanges (24) and/or folds (48, 50).

22. Concrete floor according to one of the preceding claims, **characterized in that** in particular at least three, four or a plurality of first concrete-free spaces and second concrete-free spaces are contained in the concrete floor, which are connectable or connected to each other and are arranged in an alternating sequence, particularly under formation of a pipe system preferably having at least one inlet opening and at least one outlet opening, said first concrete-free spaces having a smaller and/or larger maximum diameter in cross-section than said second concrete-free spaces, and said first and second concrete-free spaces substantially having a cylindrical form and being connectable or connected to each other by means of wall elements formed in the shaped of truncated cones.

23. Concrete floor according to one of the preceding claims, **characterized in that** the concrete floor (1, 1') forms an intermediate floor, in particular a flat ceiling or filigree floor, or a floor slab.

24. Concrete floor according to one of the preceding claims, **characterized by** a substantially isotropic mechanical behaviour, in particular by a substantially isotropic flexural stiffness and/or by a substantially isotropic transverse strength.

25. Concrete floor according to one of the preceding claims, **characterized in that** at least three, in particular a plurality of, first and second concrete-free spaces (8, 8', 8"; 18, 18', 19) are arranged in an alternating sequence under formation of a pipe or pipe unit.

26. Concrete floor according to one of the preceding claims, **characterized in that** one, in particular flat or inwardly curved, narrow side of the first and/or second concrete-free spaces (8, 8', 8"; 18, 18', 19) is/are facing toward the upper side and/or underside of the concrete floor.

27. Use of the concrete floors according to Claims 1 to 26 for the temperature control of buildings.

28. Use of the concrete floor according to one of Claims 1 to 26 as an intermediate floor, in particular as a flat ceiling or filigree floor, or as a floor slab.

29. Pipe, in particular having at least one pipe inlet (10) and at least one pipe outlet (12), for use in Concrete floor according to one of Claims 1 - 28, **characterized by** at least two, in particular at least 10, alternating first and second pipe sections in sequence, said pipe (2, 2', 2") comprising at least along a first pipe section a pipe cross-section having a polygonal or almost polygonal cross-sectional area, the diameter of the cross-section of the second pipe sections of the pipe (2, 2', 2") being smaller between sequential first pipe sections than the largest possible cross-sectional diameter of these first sections, at least one wall surface (3, 5, 7, 42, 44) of at least one, in particular a plurality of, first and/or second pipe section(s) (8, 8', 8"; 18, 18', 19) having at least in sections in the longitudinal direction of the pipe at least one indentation (46) in the direction toward the inside of the pipe (2, 2', 2"), or at least one edge section of at least one, in particular a plurality of, first and/or second pipe section(s) (8, 8', 8"; 18, 18', 19) being present in a rounded, flattened and/or profiled form, and at least two wall surfaces (3, 42, 46) or, in particular flattened, rounded or profiled, edge sections of a first and/or second pipe section (8, 8', 8"; 18, 18', 19) being aligned substantially in parallel to each other, at least one of these wall surfaces or edge sections at least in sections having at least one indentation (46) in the longitudinal direction in the direction toward the inside of the pipe (2, 2', 2").

30. Pipe according to Claim 29, **characterized in that**, between the first pipe sections having a polygonal or almost polygonal cross-sectional area, the pipe (2, 2', 2") has second pipe sections having a circular or ellipsoidal cross-section.

31. Pipe according to one of Claims 29 or 30, **characterized in that** the first pipe sections, arranged in particular in an alternating sequence with second pipe sections, substantially coincide in form and/or size, and/or **in that** at least two sequential first pipe sections, which are connected to each other by means of a second pipe section, have a substantially uniform polygonal cross-sectional form, in particular along the connecting axis, in particular these first pipe sections being aligned substantially uniformly or able to be aligned substantially uniformly in relation to their cross-sectional form.

32. Pipe according to one of Claims 29 to 31, **characterized in that** the first and/or second pipe sections have on the inside and/or outside at least two indentations (20, 20') in sequence which are separated by one bulge (22, 22') and which extend substantially around the entire circumference of the pipe cross-section, preferably having a substantially parallel alignment and/or being at right angles to the longitudinal axis of the pipe.

33. Pipe according to one of Claims 29 to 32, **characterized in that** it is made substantially of plastic and/or metal.

## Revendications

1. Dalle en béton (1, 1'), en particulier dalle conditionnée, comprenant une face supérieure et une face inférieure, contenant des premiers espaces (8, 8', 8") exempts de béton, en particulier des espaces creux, et des deuxièmes espaces (18, 18', 19) exempts de béton, en particulier des deuxièmes espaces creux, dans la dalle en béton (1, 1'), les premiers espaces (8, 8', 8") exempts de béton, en particulier deux, trois, quatre ou une pluralité de premiers espaces exempts de béton, et les deuxièmes espaces (18, 18', 19) exempts de béton étant susceptibles d'être reliés ou étant reliés ensemble à la suite des autres en alternance au moins par tronçons, lesdits premiers espaces (8, 8', 8") exempts de béton ayant un diamètre maximal, observé en section transversale, supérieur auxdits deuxièmes espaces (18, 18', 19) exempts de béton, **caractérisée en ce que** lesdits premiers espaces exempts de béton au moins le long d'un tronçon présentant un en particulier, deux, trois, quatre, ou plus, premières faces de paroi (3) plane, concave, convexe ou en forme d'ondulation ou de zigzag, non orientées sensiblement parallèlement ou perpendiculairement à la face inférieure et/ou supérieure de la dalle en béton (1, 1').

2. Dalle en béton selon la revendication 1, **caractérisée en ce que** les premiers et/ou les deuxièmes espaces (8, 8', 8" ; 18, 18', 19) exempts de béton, au moins le long d'un tronçon, en particulier avec une section transversale sensiblement polygonale, comprennent au moins deux, en particulier trois, quatre, cinq ou plus, premières faces de paroi (3) qui ne sont pas orientées sensiblement parallèlement ou perpendiculairement à la face inférieure et/ou supérieure de la dalle en béton (1, 1').

3. Dalle en béton selon l'une des revendications précédentes, **caractérisée en ce que** les premiers et/ou deuxièmes, en particulier les premiers espaces (8, 8', 8" ; 18, 18', 19) exempts de béton, au moins le long d'un tronçon, disposent d'une deuxième face de paroi (5) sensiblement plane, en forme d'ondulation convexe et/ou concave, et/ou d'un bord (9), en particulier découpé, arrondi et/ou profilé, orienté sensiblement parallèlement à la face supérieure de la dalle en béton (1, 1') et/ou en particulier qui présente en moyenne un plus faible espacement par rapport à la face supérieure que les premières faces de paroi (3') des premiers et/ou deuxièmes espaces exempts de béton, et/ou, au moins le long d'un tronçon, disposent d'une deuxième face de paroi (5) sensiblement plane en forme d'ondulation convexe et/ou concave et/ou d'un bord (7) en particulier découpé, arrondi ou profilé orienté sensiblement parallèlement à la face inférieure de la dalle en béton (1, 1') et/ou qui présente en particulier en moyenne un plus faible espacement par rapport à la face inférieure que les premières faces de paroi (3) des premiers et/ou deuxièmes espaces exempts de béton.

4. Dalle de béton selon l'une des revendications précédente, **caractérisée en ce qu'**au moins un bord du tronçon du premier et/ou du deuxième espace exempt de béton est orienté, avec une section transversale sensiblement polygonale, de manière que celle-ci majoritairement, en particulier sans exception, présente un plus faible espacement par rapport à la face inférieure de la dalle en béton (1, 1') que les premières faces de paroi (3) se raccordant à cette arête, et/ou qu'une autre arête de tronçon, majoritairement, en particulier sans exception, présente un plus faible espacement par rapport à la face supérieure de la dalle en béton (1, 1') que les premières faces de paroi (3) se raccordant à cette arête.

5. Dalle en béton selon l'une des revendications précédentes, **caractérisée en ce que** les espaces (8, 8', 8" ; 18, 18',19) exempts de béton contiennent un matériau synthétique, en particulier une matière synthétique alvéolaire.

6. Dalle en béton selon l'une des revendications précédentes **caractérisée en ce que** des premiers espaces (8, 8', 8") exempts de béton, et des deuxièmes espaces (18, 18' , 19) exempts de béton se présentent à la suite les uns des autres de façon alternée

7. Dalle de béton selon l'une des revendications précédentes **caractérisée en ce que** les premiers espaces exempts de béton, disposés en particulier de façon alternée avec des deuxièmes espaces exempts de béton, coïncident pratiquement, en forme et/ou en taille, et/ou **en ce qu'**au moins deux premiers espaces exempts de béton se suivant, reliés ensemble par un deuxième espace exempt de béton, disposent d'une forme de section transversale sensiblement unitaire, en particulier le long de l'axe de liaison, sachant qu'en particulier ces premiers espaces exempts de béton sont orientés sensiblement régulièrement par rapport à leur forme de section transversale.

8. Dalle en béton selon la revendication 7, **caractérisée en ce que** les premiers et deuxièmes espaces (8, 8', 8" ; 18, 18', 19) exempts de béton, se suivant, en particulier en alternant, sont reliés ou susceptibles d'être reliés ensemble en constituant un système de tuyauterie (2, 2', 2").

9. Dalle en béton selon la revendication 8, **caractérisée en ce que** la liaison de premiers et de deuxièmes espaces (8, 8', 8" ; 18, 18', 19) exempts de béton se suivant se fait par l'intermédiaire d'éléments de paroi (34, 36), allant en s'effilant ou allant en s'élargissant, en particulier ayant la forme de troncs de cône.

10. Dalle en béton selon l'une des revendications précédentes, **caractérisée en ce que** les espaces (8, 8', 8" ; 18, 18', 19) exempts de béton contiennent un gaz et/ou un fluide et, en particulier, sont susceptibles d'être traversés par un écoulement.

11. Dalle en béton selon l'une des revendications 8 à 10, **caractérisé en ce que** le système de tuyauterie (2, 2', 2") comprend au moins une ouverture d'admission et au moins une ouverture d'échappement (12).

12. Dalle en béton selon l'une des revendications précédentes, **caractérisée en ce qu'**au moins une face de paroi (3) des premiers et/ou des deuxièmes espaces (8, 8', 8" ; 18, 18', 19) exempts de béton présente, au moins par tronçons, côté intérieur et/ou côté extérieur, deux bosses rentrantes (20, 20') séparées par un bombement (22, 22'), se suivant, les bosses rentrantes s'étendant sensiblement sur la totalité de la périphérie de la section transversale, de préférence en une orientation sensiblement parallèle.

13. Dalle en béton selon l'une des revendications précédentes, **caractérisée en ce que** les sections transversales des premiers et/ou des deuxièmes espaces (8, 8', 8" ; 18, 18', 19) exempts de béton ont, au moins par tronçons, sensiblement la forme d'un triangle, d'un tétragone, d'un pentagone, d'un hexagone, d'un heptagone ou d'un octogone, en particulier la forme d'un carré, d'un trapèze ou d'un rectangle, en particulier avec des bords arrondis ou aplatis.

14. Dalle en béton selon l'une des revendications précédentes, **caractérisée en ce que** les sections transversales des deuxièmes espaces (18, 18', 19) exempts de bétons sont sensiblement à forme circulaire ou elliptique.

15. Dalle en béton selon l'une des revendications précédentes, **caractérisée en ce que** des premiers et deuxièmes espaces (8, 8', 8" ; 18, 18', 19), se suivant de façon alternée, sont disposés sensiblement le long d'une ligne droite ou incurvée et, en particulier, forment un segment (14) d'un système de tuyauterie (2, 2', 2"), en contenant au moins deux premiers et deuxièmes espaces exempts de béton.

16. Dalle en béton selon la revendication 15, **caractérisée en ce qu'**au moins deux segments de tuyauterie (14) s'étendent sensiblement parallèlement l'un à l'autre ; ces segments de tuyauterie (14) étant susceptibles d'être reliés ou étant reliés, en particulier par l'intermédiaires de deuxièmes espaces (19) exempts de béton, en particulier incurvés.

17. Dalle en béton selon l'une des revendications précédentes **caractérise en ce que**, sous la surface de la face supérieure et/ou sous la surface de la face inférieure de la dalle en béton (1, 1'), en particulier au-dessous et/ou au-dessus des deuxièmes espaces (8, 8', 8" ; 18, 18', 19) exempts de béton, est prévue dans ceux-ci une armature (4, 6).

18. Dalle en béton selon l'une des revendications précédentes, **caractérisée en ce que** les faces de paroi (3) des premiers et deuxièmes espaces (8, 8', 8" ; 18, 18', 19) exempts de béton sont formées, par tronçons ou en particulier continument, en matière synthétique et/ou en métal.

19. Dalle en béton selon la revendication 18, **caractérisée en ce que** les faces de paroi forment une tuyauterie ou un système de tuyauterie (2, 2', 2"), en métal et/ou en matière synthétique.

20. Dalle en béton selon la revendication 19, **caractérisée en ce que** la paroi intérieure et/ou la paroi extérieure de la tuyauterie (2, 2', 2"), en particulier dans la zone des premiers espaces (8, 8', 8") exempts de béton, dispose chaque fois d'au moins deux bombements (22, 22') successifs, séparés par une bosse rentrante (20, 20'), s'étendant essentiellement sur la totalité de la circonférence de la section transversale tubulaire, de préférence en une orientation sensiblement parallèle.

21. Dalle en béton selon la revendication 20, **caractérisée en ce que** la tuyauterie (2, 2', 2") est susceptible d'être composée ou est composée d'une partie inférieure (32, 32') et d'une partie supérieure (30, 30'), susceptibles d'être reliées ou reliées, en particulier par l'intermédiaire d'au moins des brides (24) et/ou des plis (48, 50), posé(e)s les un(e)s sur les autres, en particulier s'engageant les uns dans les autres, au moins dans certaines parties.

22. Dalle en béton selon l'une des revendications précédentes, **caractérisée en ce, que**, dans la dalle en béton, sont contenus au moins trois, quatre ou une pluralité de premier(s) espace(s) exempt(s) de béton et de deuxième(s) espace(s) exempt(s) de béton, susceptibles d'être reliés ou reliés entre eux, en particulier en formant un système de tuyauterie, de préférence présentant au moins une ouverture d'admission et au moins une ouverture d'évacuation, et se présentent en se succédant les uns les autres de façon alternée, lesdits premiers espaces exempts de béton ayant, observés en vue en coupe, un diamètre maximal plus petit et/ou plus grand que lesdits deuxièmes espaces exempts de béton, et lesdits premiers et deuxièmes espaces exempts de béton présentant sensiblement une forme cylindrique et étant susceptibles d'être reliés, ou étant reliés ensemble, par l'intermédiaire d'éléments de paroi en forme de troncs de cône.

23. Dalle en béton selon l'une des revendications précédentes, **caractérisée en ce que** la dalle en béton (1, 1') constitue une dalle d'étage, en particulier une dalle plate ou une dalle filigrane, ou une plaque de sol.

24. Dalle en béton selon l'une des revendications précédentes, **caractérisée par** un comportement mécanique sensiblement isotrope, en particulier par une résistance en flexion sensiblement isotrope et/ou par une résistance au cisaillement sensiblement isotrope.

25. Dalle en béton selon l'une des revendications précédentes, **caractérisée en ce qu'**au moins trois, en particulier une pluralité de premiers et deuxièmes espaces (8, 8', 8"; 18, 18', 19) exempts de béton, sont disposés en alternance se suivant, en formant une tuyauterie ou un ensemble de tuyauterie.

26. Dalle en béton selon l'une des revendications précédentes, **caractérisée en ce qu'**un côté étroit, en particulier aplati ou bombé vers l'intérieur, des premiers et/ou des deuxièmes espaces (8, 8', 8" ; 18, 18', 19) est ou sont tourné(s) vers la face supérieure et/ou de la face inférieure de la dalle en béton.

27. Utilisation des dalles en béton selon les revendications 1 à 26 pour la climatisation de bâtiments.

28. Utilisation de la dalle en béton selon l'une des revendications 1 à 26, en tant que dalle d'étage, en particulier de dalle plate ou de dalle filigrane, ou bien de plaque de sol.

29. Tuyauterie, en particulier avec au moins une admission de tube (10) et au moins un échappement de tube (12), pour l'utilisation dans une dalle en béton selon l'une des revendications 1 à 28, **caractérisée par** au moins deux, en particulier au moins 10 premiers et deuxièmes tronçons tubulaires se suivant en alternance, ladite tuyauterie (2, 2',2") présentant, au moins le long d'un premier tronçon tubulaire, une section transversale tubulaire ayant une surface de section transversale polygonale ou à peu près polygonale, le diamètre de la section transversale du deuxième tronçon tubulaire de la tuyauterie (2, 2', 2"), entre des premiers tronçons tubulaires se suivant, étant inférieur au diamètre de section transversale maximum possible de ces premiers tronçons, et où au moins une face de paroi (3, 5, 7, 42, 44) présente au moins un, en particulier une pluralité, de premiers et/ou de deuxièmes tronçons tubulaires (8, 8', 8" ; 18, 18', 19) au moins par tronçons en direction longitudinale de la tuyauterie, au moins un bosse rentrante (46), orientée en direction de l'intérieur de la tuyauterie (2, 2', 2"), ou au moins un tronçon de bord d'au moins un, en particulier d'une pluralité, de premiers et/ou de deuxièmes tronçons tubulaires (8, 8', 8" ; 18, 18', 19) se présentant sous forme arrondie, aplatie et/ou profilée, et où au moins deux faces de parois (3, 42, 46) ou, en particulier, des tronçons de bords aplatis, arrondis ou profilés d'un premier et/ou d'un deuxième tronçon de tuyau (8, 8', 8" ; 18, 18', 19) sont orientés sensiblement parallèlement entre eux, où au moins une de ces faces de paroi ou tronçon de bord présente, au moins par tronçons, en direction longitudinale, au moins une bosse rentrante (46), orientée dans la direction de l'intérieur de la tuyauterie (2, 2', 2").

30. Tuyauterie selon la revendication 29, **caractérisée en ce que** la tuyauterie (2, 2', 2"), entre les premiers tronçons tubulaires à surface de section transversale polygonale ou à peu près polygonale, présente des deuxièmes tronçons tubulaires, ayant une section transversale circulaire ou elliptique.

31. Tuyauterie selon l'une des revendications 29 ou 30, carctérisée en ce que les premiers tronçons tubulaires, disposés en particulier en alternant avec des deuxièmes tronçons tubulaires, coïncident pratiquement, en forme et/ou en taille, et/ou en ce qu'au moins deux premiers tronçons tubulaires successifs, reliés entre eux par un deuxième tronçon tubulaire, disposent d'une forme de section transversale polygonale sensiblement unitaire, en particulier le long de l'axe de liaison, en particulier ces premiers tronçons tubulaires étant susceptibles d'être orientés ou orientés, sensiblement régulièrement par rapport à leur forme de section transversale.

32. Tuyauterie selon l'une des revendications 29 à 31, **caractérisée en ce que** les premiers et/ou les deuxièmes tronçons tubulaires présentent, intérieurement et/ou extérieurement, au moins deux bossages rentrants (20, 20') successifs, séparés par un bombement (22, 22'), qui s'étendent sensiblement sur la totalité de la périphérie du tronçon tubulaire, de préférence sous une orientation sensiblement parallèle et/ou transversalement par rapport à l'axe longitudinal de la tuyauterie.

33. Tuyauterie selon l'une des revendications 29 à 32, **caractérisée en ce que** celle-ci est formée essentiellement de matières synthétiques et/ou de métal.
